# EUROPÄISCHE PATENTSCHRIFT

(11) **EP 0 902 796 B1**
(45) Veröffentlichungstag und Bekanntmachung des Hinweises auf die Patenterteilung: **29.03.2000**
(21) Anmeldenummer: 97925964.5
(22) Anmeldetag: 28.05.1997
(51) Int. Cl.: C08F 8/30, C08K 5/17, C08J 5/04, C09J 133/06

(54) **THERMISCH HÄRTBARE, WÄSSRIGE ZUSAMMENSETZUNGEN**
THERMOSETTING, AQUEOUS COMPOSITIONS
COMPOSITIONS AQUEUSES THERMODURCISSABLES

(30) Priorität: 29.05.1996 DE 19621573
(43) Veröffentlichungstag der Anmeldung: 24.03.1999
(73) Patentinhaber: BASF AKTIENGESELLSCHAFT, 67056 Ludwigshafen (DE)
(72) Erfinder: RECK, Bernd, D-67269 Grünstadt (DE); WISTUBA, Eckehardt, D-67098 Bad Dürkheim (DE); BECKERLE, Wilhelm, Friedrich, D-67240 Bobenheim-Roxheim (DE); MOHR, Jürgen, D-67269 Grünstadt (DE); KISTENMACHER, Axel, 67098 Bad Dürkheim (DE); ROSER, Joachim, D-68165 Mannheim (DE)
(74) Vertreter: Kinzebach, Werner, Dr.
(86) Internationale Anmeldenummer: EP9702796
(87) Internationale Veröffentlichungsnummer: WO9745461

(56) Entgegenhaltungen:
- EP-A- 0 445 578
- WO-A-97/31059
- DE-A- 1 794 341
- DE-A- 2 214 450

## Beschreibung

Die vorliegende Erfindung betrifft thermisch härtbare, wäßrige Zusammensetzungen aus hydroxyalkylierten Polyaminen und Polycarbonsäuren sowie deren Verwendung.

Die Verfestigung von flächenförmigen Fasergebilden, beispielsweise Faservliesen, Formkörpern wie Spanplatten, etc. erfolgt häufig auf chemischem Weg unter Verwendung eines polymeren Bindemittels. Zur Erhöhung der Festigkeit, insbesondere der Naß- und Wärmestandfestigkeit, werden vielfach Bindemittel eingesetzt, welche Formaldehyd abspaltende Vernetzer enthalten. Damit besteht aber die Gefahr von Formaldehydemissionen.

Zur Vermeidung von Formaldehydemissionen wurden bereits zahlreichen Alternativen zu den bisher bekannten Bindemitteln vorgeschlagen. So sind aus der US-A-4,076,917 Bindemittel bekannt, welche Carbonsäure- oder Carbonsäureanhydrid-haltige Polymerisate und β-Hydroxyalkylamide als Vernetzer enthalten. Das molare Verhältnis von Carboxylgruppen zu Hydroxylgruppen beträgt bevorzugt 1:1. Nachteilig ist die relativ aufwendige Herstellung der β-Hydroxyalkylamide.

Aus der EP-A-445 578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren. Als hochmolekulare Polycarbonsäuren werden Polyacrylsäure, Copolymere aus Methylmethacrylat/n-Butylacrylat/Methacrylsäure und aus Methylmethacrylat/Methacrylsäure beschrieben. Als mehrwertige Alkohole bzw. Alkanolamine werden 2-Hydroxymethylbutan-1,4-diol, Trimethylolpropan, Glycerin, Poly(methylmethacrylat-co-hydroxypropylacrylat), Diethanolamin und Triethanolamin eingesetzt.

Aus der EP-A-583 086 sind formaldehydfreie, wäßrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen. Verwendung findet insbesondere Polyacrylsäure. Das Bindemittel enthält weiterhin ein Polyol, beispielsweise Glycerin, Bis-[N,N-Di(β-hydroxyethyl)adipamid, Pentaerythrit, Diethylenglykol, Ethylenglykol, Gluconsäure, β-D-Lactose, Sucrose, Polyvinylalkohol, Diisopropanolamin, 2-(2-Aminoethylamino)ethanol, Triethanolamin, Tris(hydroxymethylamino)methan und Diethanolamin.

Diese Bindemittel benötigen einen phosphorhaltigen Reaktionsbeschleuniger, um ausreichende Festigkeiten der Glasfaservliese zu erreichen. Es wird darauf hingewiesen, daß auf die Anwesenheit eines derartigen Reaktionsbeschleunigers nur verzichtet werden kann, wenn ein hochreaktives Polyol eingesetzt wird. Als hochreaktive Polyole werden die β-Hydroxyalkylamide genannt.

Die EP-A-651 088 beschreibt entsprechende Bindemittel für Substrate aus Cellulosefaser. Diese Bindemittel enthalten zwingend einen phosphorhaltigen Reaktionsbeschleuniger.

Die EP-A-672 920 beschreibt formaldehydfreie Binde-, Imprägnieroder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Naßreißfestigkeiten erzielt. Im Rahmen von Vergleichsversuchen wurden auch aminhaltige Vernetzungsmittel und überwiegend linear aufgebaute Polyole getestet. Es wird darauf hingewiesen, daß aminhaltige Vernetzungsmittel flokkulierend wirken und daß die überwiegend linear aufgebauten Polyole zu schwächerer Vernetzung führen als die cyclischen Polyole.

Die DE-A-22 14 450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muß jedoch auf bis zu 300°C erhitzt werden.

Der vorliegenden Erfindung liegt die Aufgabe zugrunde, formaldehydfreie Zusammensetzungen zur Verfügung zu stellen, die ein rasches Härten bei niedriger Temperatur erlauben und dem Substrat gute mechanische Eigenschaften verleihen.

Überraschenderweise wurde nun gefunden, daß diese Aufgabe gelöst wird, wenn man Polycarbonsäuren zusammen mit aliphatischen Verbindungen einsetzt, die mindestens zwei mit Hydroxyalkylgruppen substituierte Aminogruppen enthalten.

Gegenstand der vorliegenden Erfindung sind daher thermisch härtbare, wäßrige Zusammensetzungen, enthaltend
A) mindestens eine wasserlösliche, lineare oder verzweigte aliphatische Verbindung, die pro Molekül wenigstens zwei funktionelle Aminogruppen vom Typ (a) oder vom Typ (b) 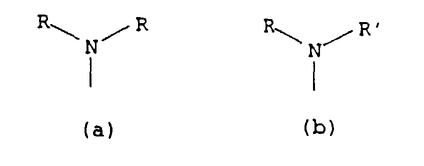 worin R für Hydroxyalkyl steht und R' für Alkyl steht, enthalten und
B) ein durch radikalische Polymerisation erhältliches Polymerisat, das zu 5 bis 100 Gew.-% aus einer ethylenisch ungesättigten Mono- oder Dicarbonsäure aufgebaut ist.

Vorzugsweise umfaßt die Verbindung (A) wenigstens 5 Hydroxyalkylgruppen.

Im Rahmen der vorliegenden Erfindung bedeutet:

Alkyl eine geradkettige oder verzweigte Alkylgruppe, vorzugsweise eine C₁-C₁₂-Alkylgruppe und insbesondere eine C₁-C₆-Alkylgruppe. Beispiele für Alkylgruppen sind Methyl, Ethyl, n-Propyl, iso-Propyl, n-Butyl, sek-Butyl, iso-Butyl, t-Butyl, n-Pentyl, n-Hexyl, 2-Ethylhexyl, n-Decyl und n-Dodecyl.

Hydroxyalkyl eine geradkettige oder verzweigte Alkylgruppe, die mindestens eine Hydroxygruppe aufweist. Vorzugsweise weist die Hydroxyalkylgruppe eine Hydroxygruppe auf, die insbesondere endständig gebunden ist. Vorzugsweise besitzt der Alkylrest der Hydroxyalkylgruppe die gleichen Bedeutungen wie oben für Alkyl angegeben. Bevorzugt sind die 3-Hydroxypropylgruppe, die 2-Hydroxypropylgruppe und insbesondere die 2-Hydroxyethylgruppe.

Cycloalkyl eine C₃-C₇-Cycloalkylgruppe und insbesondere die Cyclopentyl- oder Cyclohexylgruppe.

Alkylen eine geradkettige oder verzweigte Alkylengruppe, vorzugsweise eine C₂-C₁₂-Alkylengruppe und insbesondere eine C₂-C₈-Alkylengruppe.

Bei der in den erfindungsgemäßen Zusammensetzungen zur Anwendung kommenden Komponente (A) handelt es sich vorzugsweise um mindestens eine Verbindung der Formel I 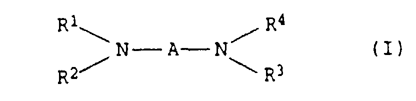 worin
A für C₂-C₁₈-Alkylen steht, das gegebenenfalls substituiert ist durch ein oder mehrere Gruppen, die unabhängig voneinander ausgewählt sind unter Alkyl, Hydroxyalkyl, Cycloalkyl, OH und NR⁶R⁷, wobei R⁶ und R⁷ unabhängig voneinander für H, Hydroxyalkyl oder Alkyl stehen,
   und das gegebenenfalls unterbrochen ist durch ein oder mehrere Sauerstoffatome und/oder NR⁵-Gruppen, wobei R⁵ für H, Hydroxyalkyl, (CH₂)ₙNR⁶R⁷, wobei n für 2 bis 5 steht und R⁶ und R⁷ die oben angegebenen Bedeutungen besitzen, oder Alkyl, das seinerseits durch ein oder mehrere NR⁵-Gruppen, wobei R⁵ die oben angegebenen Bedeutungen besitzt, unterbrochen und/ oder durch ein oder mehrere NR⁶R⁷-Gruppen substituiert ist, wobei R⁶ und R⁷ die oben angegebenen Bedeutungen besitzen, steht;
   oder A für einen Rest der Formel steht: 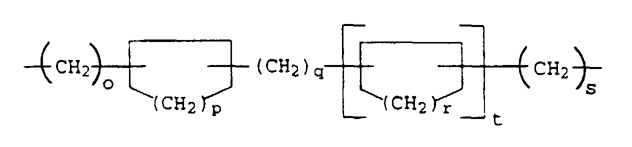 worin
   o, q und s unabhängig voneinander für 0 oder eine ganze Zahl von 1 bis 6 stehen,
   p und r unabhängig voneinander für 1 oder 2 stehen und
   t für 0,1 oder 2 steht,
   wobei die cycloaliphatischen Reste auch durch 1, 2 oder
   3 Alkylreste substituiert sein können und
R¹, R² und R³ und R⁴ unabhängig voneinander für H, Hydroxyalkyl, Alkyl oder Cycloalkyl stehen, wobei die Verbindungen pro Molekül mindestens zwei, vorzugsweise mindestens drei Hydroxyalkylgruppen aufweisen.

Als Komponente (A) besonders bevorzugt sind:
(1) Verbindungen der Formel Ia 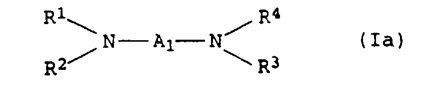 worin
   - A₁: für C₂-C₁₂-Alkylen steht, das gegebenenfalls durch mindestens eine Alkylgruppe und/oder mindestens eine NR⁶R⁷-Gruppe substituiert ist, wobei R⁶ und R⁷ unabhängig voneinander für Alkyl oder Hydroxyalkyl stehen und
   - R¹, R², R³ und R⁴: unabhängig voneinander für Hydroxyalkyl oder H stehen oder einer der Reste R¹ und R² und/oder einer der Reste R³ und R⁴ für Alkyl oder Cycloalkyl steht.

   Besonders brauchbare Verbindungen dieses Typs sind die Verbindungen der folgenden Formeln: 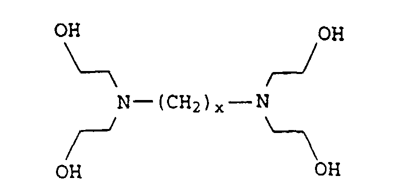 worin x für 2 bis 12, insbesondere 2, 3, 6, 8, 10 oder 12 steht, 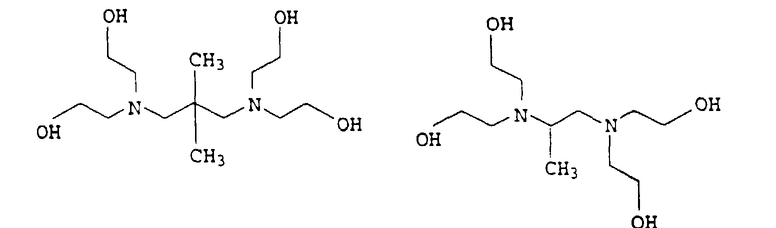 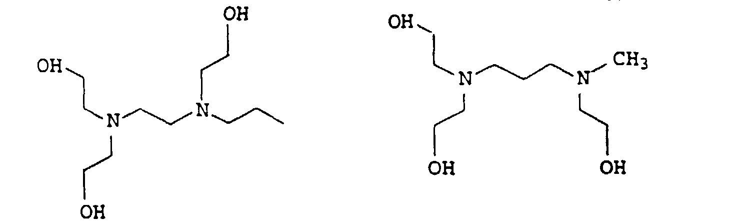 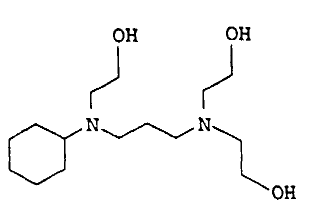 Verbindungen der Formel Ia sind auch die Aminale der Formel 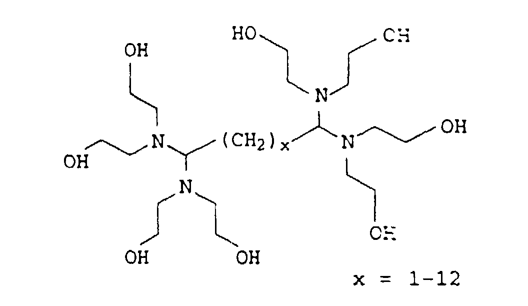
(2) Verbindungen der Formel Ib 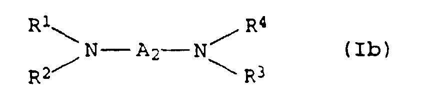 worin
   - A2: für C₂-C₈-Alkylen steht, das durch mindestens eine NR⁵-Gruppe unterbrochen ist, wobei R⁵ (oder die Reste R⁵ unabhängig voneinander) für Hydroxyalkyl oder Alkyl steht (stehen) und
   - R¹, R², R³ und R⁴: unabhängig voneinander für Hydroxyalkyl oder H stehen.

   Vorzugsweise ist der Rest A₂ durch ein oder zwei Gruppen NR⁵ unterbrochen. Besonders brauchbare Verbindungen dieses Typs sind die Verbindungen der folgenden Formeln: 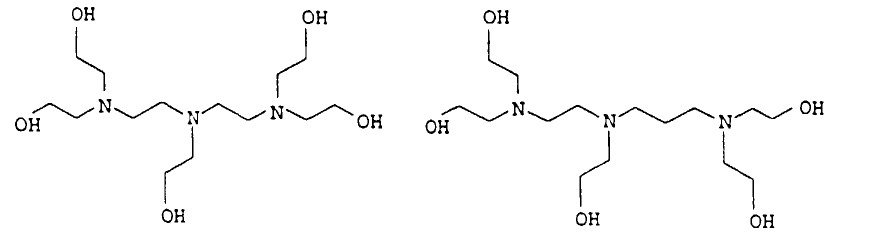 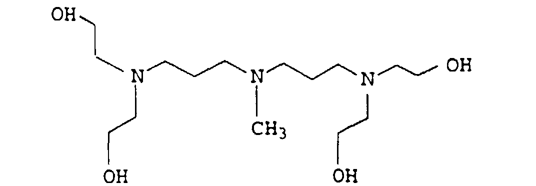 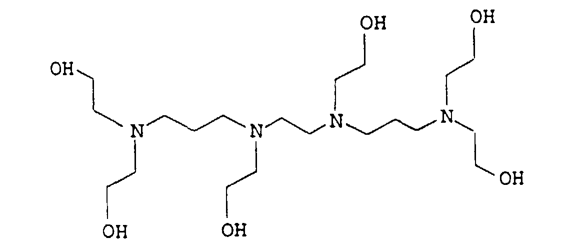
(3) Verbindungen der Formel Ic: 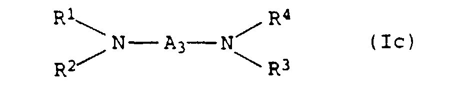 worin
   - A₃: für C₂-C₈-Alkylen steht, das durch mindestens eine NR⁵-Gruppe unterbrochen ist, wobei R⁵ für H, Hydroxyalkyl oder CH₂CH₂NR⁶R⁷ steht,
   - R¹, R², R³ und R⁴: unabhängig voneinander für Alkyl stehen, das gegebenenfalls durch mindestens eine NR⁵-Gruppe unterbrochen und/oder durch mindestens eine NR⁶R⁷-Gruppe substituiert ist,
   - R⁵: für H, Hydroxyalkyl oder -R⁸NR⁶R⁷ steht und
   - R⁶ und R⁷: unabhängig voneinander für H, Hydroxyalkyl oder -R⁸NR⁶R⁷ stehen,
   - R⁸: für einen Ethylen- oder Propylenrest steht,
   wobei (durchschnittlich) wenigstens 30%, insbesondere > 60% und bevorzugt > 80% der (hydroxyalkylierbaren) N-Atome eine Hydroxyalkylgruppe tragen.
   Vorzugsweise ist die C₂-C₈-Alkylengruppe durch mindestens zwei Gruppen NR⁵ unterbrochen. Besonders brauchbare Verbindungen dieses Typs sind Umsetzungsprodukte von Ethylenoxid mit Polyethyleniminen verschiedener Molekulargewichte mit mehreren Strukturelementen NR⁶R⁷ und NR⁵. Brauchbare Polyethylenimine sind solche, deren gewichtsmittleres Molekulargewicht im Bereich von 400 bis 2 000 000 liegt. Die nachfolgende schematische Formel soll die Verbindung dieses Typs erläutern: 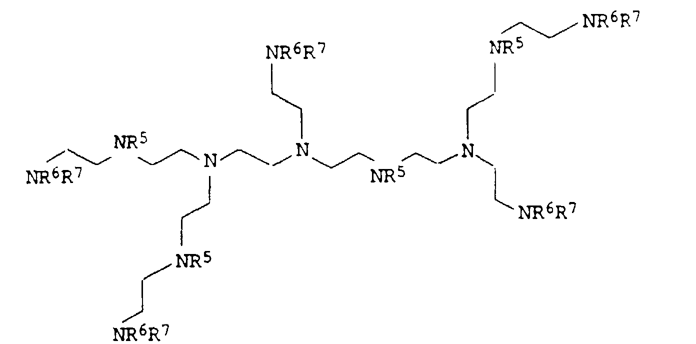 worin
   R⁵ für H, Hydroxyethyl oder -R⁸NR⁶R⁷ steht und R⁶ und R⁷ für H, Hydroxyethyl oder -R⁸NR⁶R⁷ und R⁸ für (CH₂)₂ steht, wobei im Mittel > 40%, insbesondere > 60% und besonders bevorzugt > 80% der ethoxilierbaren NH-Funktionen des Polyethylenimins mit Ethylenoxid umgesetzt sind.
(4) Verbindungen der Formel Ie 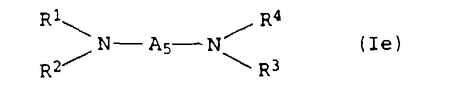 worin
   - A₅: für C₆-C₁₈-Alkylen steht, das durch mindestens eine NR⁵-Gruppe unterbrochen ist, wobei R⁵ für (CH₂)ₙNR⁶R⁷ oder Alkyl steht, das gegebenenfalls durch wenigstens eine NR⁵-Gruppe, worin R⁵ für (CH₂)ₙR⁶R⁷ oder Alkyl steht, unterbrochen und/oder durch mindestens eine NR⁶R⁷-Gruppe substituiert ist,
   - n: für 2 oder 3 steht und
   - R¹, R², R³, R⁴, R⁶ und R⁷: unabhängig voneinander für Hydroxyalkyl oder H stehen.

   Besonders brauchbare Verbindungen dieses Typs sind Polyamine der Formeln: 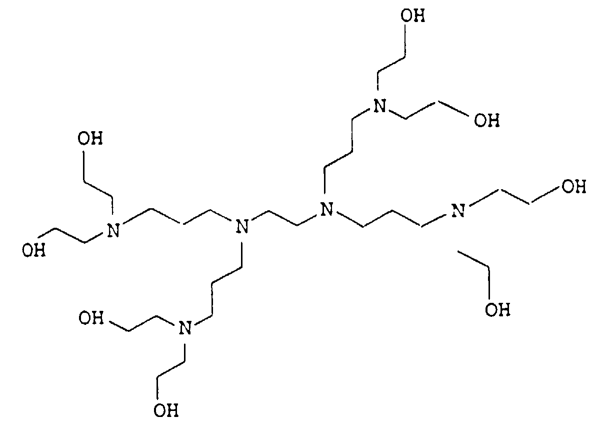 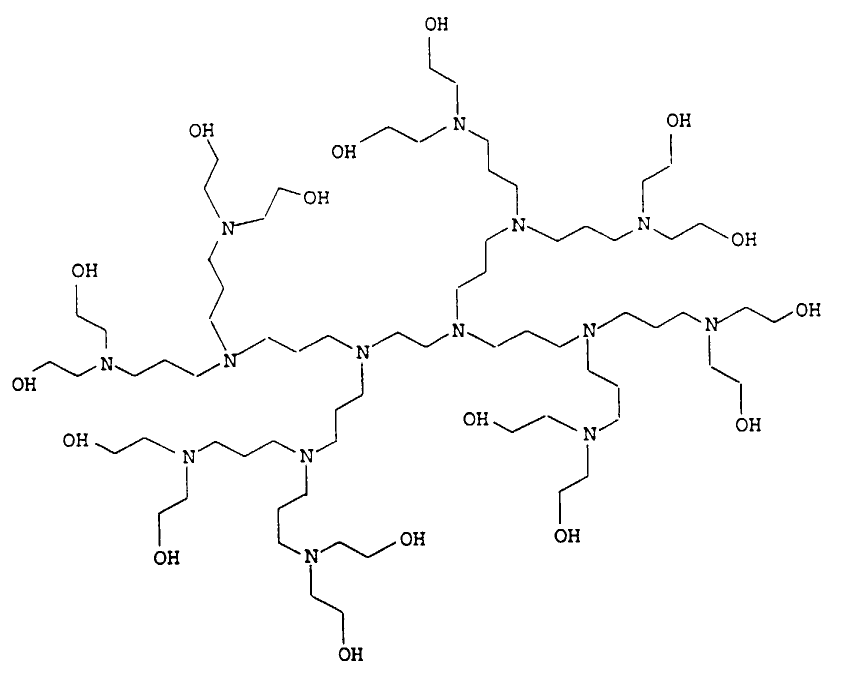
   (5) Verbindungen der Formel If 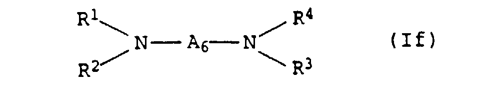 worin
      - A₆: für C₂-C₁₂-Alkylen steht, das durch mindestens ein Sauerstoffatom unterbrochen ist und
      - R¹, R², R³ und R⁴: unabhängig voneinander für Hydroxyalkyl oder H stehen.

      Vorzugsweise ist die Alkylenkette durch 1, 2 oder 3 Sauerstoffatome unterbrochen. Besonders brauchbare Verbindungen dieses Typs sind die Verbindungen folgender Formeln: 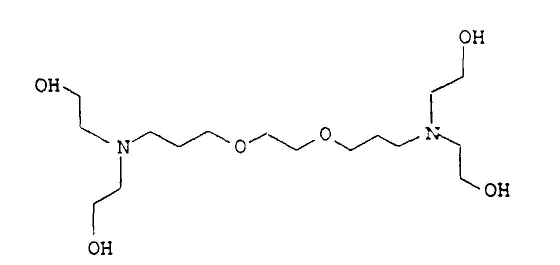 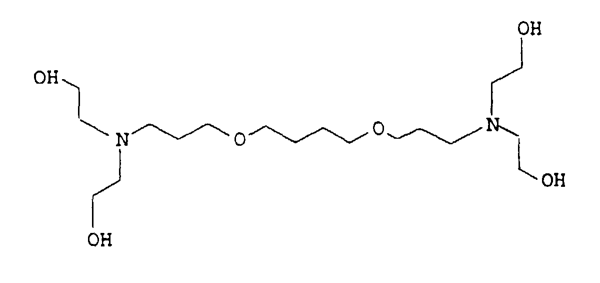 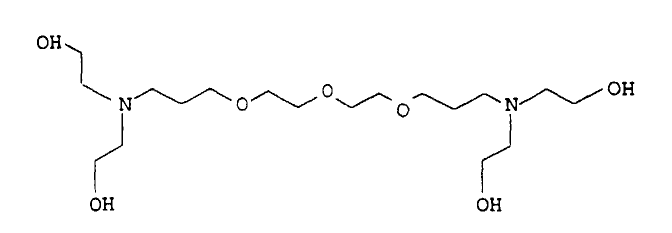
   (6) Verbindungen der Formel Ig, 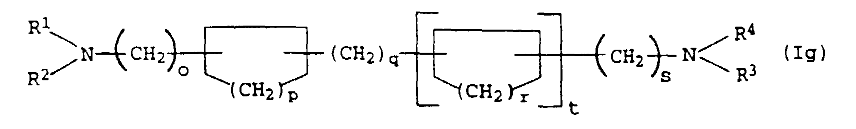 worin
      o, q und s unabhängig voneinander für 0 oder eine ganze Zahl im Bereich von 1 bis 6 stehen;
      p und r unabhängig voneinander für 1 oder 2 stehen und
      t für 0,1 oder 2 steht, wobei die cycloaliphatischen Ringe auch durch 1, 2 oder 3 Alkylreste substituiert sein können, und
      R¹, R², R³ und R⁴ unabhängig voneinander für Hydroxyalkyl oder H stehen.

   Besonders brauchbare Verbindungen dieses Typs sind 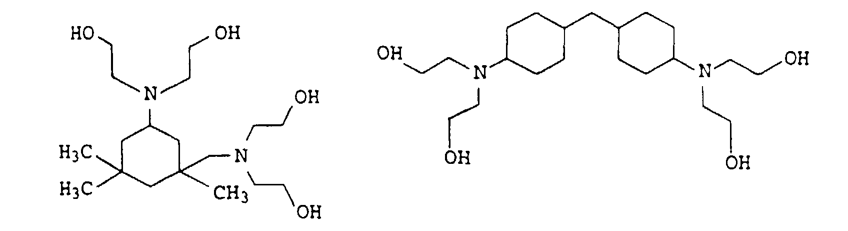 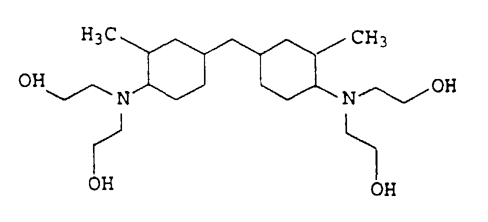
(7) Polyalkanolamine, die erhältlich sind durch Kondensation von Di- oder Trialkanolaminen mit sich selbst oder untereinander, gegebenenfalls in Gegenwart von ein- bzw. mehrwertigen Alkoholen oder ein- bzw. mehrwertigen Aminen.
   Ein Beispiel für derartige oligomere oder polymere Verbindungen ist das aus Triethanol hergestellte Kondensationsprodukt, das idealisiert durch folgende schematische Formel wiedergegeben wird:

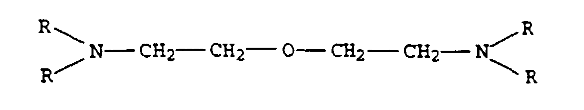

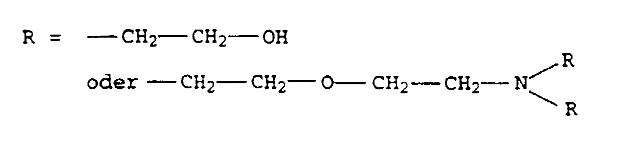

Die Verbindungen der Formeln Ia, Ib (ausgenommen die erwähnten Aminale), Ic, Id, Ie, If und Ig können durch Umsetzung der entsprechenden Polyamine mit Alkylenoxiden hergestellt werden. Die Umsetzung von Aminen mit Alkylenoxiden, insbesondere Ethylenoxid und Propylenoxid, zu den entsprechenden Alkanolaminen ist im Prinzip bekannt. Hierzu werden die Amine in Anwesenheit eines Protonendonors - im allgemeinen Wasser - mit den Alkylenoxiden, vorzugsweise bei Temperaturen zwischen 30 und 120°C, unter Normaldruck oder unter erhöhtem Druck, vorzugsweise bei 1 bis 5 bar, umgesetzt, indem pro zu oxalkylierender N-H-Funktion etwa ein Äquivalent des Alkylenoxids eingesetzt wird. Zur möglichst vollständigen Oxalkylierung kann ein geringer Überschuß an Alkylenoxid verwendet werden, vorzugsweise setzt man aber die stöchiometrische Menge oder sogar einen leichten Unterschuß des Alkylenoxids gegenüber den N-H-Funktionen ein. Die Oxalkylierung kann mit einem Alkylenoxid oder mit einem Gemisch von zwei oder mehreren Alkylenoxiden erfolgen. Wahlweise kann die Alkoxylierung mit zwei oder mehr Alkylenoxiden auch nacheinander erfolgen.

Außer Wasser kommen als Katalysatoren auch Alkohole oder Säuren in Frage, bevorzugt ist aber Wasser (zur Oxalkylierung von Aminen vgl. N.Schönfeld, Grenzflächenaktive Ethylenoxid-Addukte, S. 29-33, Wissenschaftliche Verlagsgesellschaft mbH, Stuttgart 1976 bzw. S.P. McManus et al., Synth. Comm. 3, 177 (1973)).

Die als Katalysator und/oder Lösemittel eingesetzte Wassermenge kann je nach Anforderung und Bedarf schwanken. Bei flüssigen, niedrigviskosen Aminen reichen Wassermengen zwischen 1 und 5 % aus, um die Reaktion zu katalysieren. Feste, hochviskose oder polymere Amine setzt man vorteilhaft in Wasser gelöst oder dispergiert um; die Wassermenge kann dann zwischen 10 und 90 % betragen.

Unter den beschriebenen Bedingungen für die Oxalkylierung in Gegenwart von Wasser werden im wesentlichen nur die -NH-Gruppen umgesetzt. Eine Oxalkylierung der entstehenden OH-Gruppen findet in der Regel nicht statt, so daß im wesentlichen eine Monoalkoxylierung der NH-Gruppen abläuft (d.h. pro mol NH wird maximal 1 mol Alkylenoxid addiert).

Der mittlere Alkoxylierungsgrad der aktiven NH-Gruppen ist bei Verbindungen mit weniger als 5 Stickstoffatomen pro Molekül vorzugsweise > 75%.

Als Ausgangspolyamine kann man beispielsweise verwenden α,ω-Oligomethylendiamine, wie 1,2-Ethylendiamin, 1,3-Propandiamin, 1,6-Hexamethylendiamin, 1,8-Oktamethylendiamin, 1,12-Dodecamethylendiamin, 2,2-Dimethyl-1,3-propandiamin, 1,2-Propandiamin, 2-(Ethylamino)ethylamin, 2-(Methylamino)-propylamin, N-(2-Aminoethyl)-1,2-ethanediamin, N-(2-Aminoethyl)-1,3-propandiamin, N-(2-Aminoethyl)-N-methylpropanediamin, N,N-Bis-(3-Amino-propyl)-ethylendiamin, 4-Aminoethyl-1,8-octandiamin, 2-Butyl-2-ethyl-1,5-pentandiamin, 2,2,4-Trimethylhexamethylendiamin, 2-Methylpentamethylendiamin, 1,3-Diaminopentan, 3-Isopropylaminopropylamin, Triethylenetetramin oder Tetraethylenpentamin.

Oligo- und Poly-N-(β-hydroxyethyl)aminoverbindungen (Aminale) können auch durch Kondensation von aliphatischen Dialdehyden und Diethanolamin hergestellt werden.

Zu Poly-N-(β-hydroxyethyl)aminoverbindungen (8) gelangt man, wie beispielsweise in der US-A-4,505,839 und der DE-A-3 206 459 beschrieben, durch thermische Kondensation von Triethanolamin zu Poly(triethanolamin) oder durch thermische Kondensation von Alkanolaminen zu hydroxylgruppenhaltigen Polyethern. Die Kondensation der Alkanolamine kann auch, wie in DE-A-1 243 874 beschrieben, in Gegenwart ein- bzw. mehrwertiger primärer oder sekundärer Amine oder ein- bzw. mehrwertiger Alkohole erfolgen. Je nach Kondensationsbedingungen kann das Molekulargewicht dieser Produkte und damit ihre Viskosität im breiten Rahmen variiert werden.

Die gewichtsmittleren Molekulargewichte dieser Polykondensate liegen üblicherweise zwischen 200 und 100 000.

Die Verbindungen der Formeln Ie können durch Alkoxylierung aus sogenannten Dendrimer-Polyaminen hergestellt werden, deren Synthese durch Michael-Addition von aliphatischen Diaminen an Acrylnitril und anschließende katalytische Hydrierung in der WO 93/14147 beschrieben ist. Ein Beispiel hierfür ist das hydrierte Addukt von 4 mol Acrylnitril und Ethylendiamin. Dieses Hexamin mit 4 primären Aminogruppen kann auf analoge Weise weiter umgesetzt werden zu dem N-14-Amin mit 8 primären Aminogruppen. Anstelle von Ethylendiamin können auch andere aliphatische Di-und Polyamine eingesetzt werden.

Auch Aminogruppen enthaltende Polymere, wie Polyethylenimin, lassen sich zu den Verbindungen der Formel Ic mit Ethylenoxid in wäßriger Lösung zu brauchbaren Poly-N-(β-hydroxyethyl)aminoverbindungen umsetzen, wobei der Umsetzungsgrad der vorhandenen NH-Funktionen im allgemeinen > 40%, insbesondere > 60% und bevorzugt > 80% ist. Die Herstellung von Polyethylenimin ist allgemein bekannt. Polyethylenimine im Molekulargewichtsbereich M_{w} = 800 bis 2 000 000 sind beispielsweise von der Fa. BASF unter der Bezeichnung Lupasol® erhältlich. Polyethylenimine bestehen in der Regel aus verzweigten Polymerketten und enthalten daher primäre, sekundäre und tertiäre Aminogruppen. Deren Verhältnis liegt überlicherweise bei ca. 1:2:1. Bei sehr niedrigen Molekulargewichten sind jedoch auch höhere Anteile primärer Aminogruppen möglich. Auch weitgehend lineare Polyethylenimine, die über spezielle Herstellverfahren zugänglich sind, sind für diese Anwendung geeignet.

Polymere Alkylenimine mit primären und/oder sekundären Aminogruppen, die nach Oxalkylierung in den erfindungsgemäßen Zusammensetzungen verwendet werden können, sind beschrieben in "Encyclopedia of Polymer Science and Engineering', H. Mark (Editor), Revised Edition, Volume 1, S. 680-739, John Wiley & Sons Inc., New York, 1985;

Es ist auch möglich, Hydroxyalkyl-substituierte Polyalkylenimine durch Polymerisation von N-Hydroxyalkylazisidinen herzustellen.

Weiterhin können auch oxalkylierte Allylamin-Polymere und -Copolymere in den erfindungsgemäßen Zusammensetzungen verwendet werden.

Die Verbindungen der Formel If lassen sich ausgehende von Oxaminen, wie 4,7-Dioxadecan-1,10-diamin, 4,9-Dioxadecan-1,12-diamin, 4,11-Dioxatetradecan-1,14-diamin, 4,9-Dioxadodecan-1,12-diamin, 4,7,10-Trioxatridecan-1,13-diamin herstellen. Geeignete Ausgangsamine sind auch Polyoxyalkylenamine, die von der Fa. Huntsman unter der Bezeichnung Jeffamine® vertrieben werden. Beispiele hierfür sind die Diamine, Jeffamine D-230, Jeffamine-D-400, Jeffamine D-2000, Jeffamine D-4000, Jeffamine ED-600, Jeffamine ED-900, Jeffamine ED-2001, Jeffamine EDR-148 sowie die Triamine Jeffamine T-403, Jeffamine T-3000 und Jeffamine T-5000.

Umsetzungprodukte von aromatischen Polyaminen mit Alkylenoxid sind prinzipiell auch für die Verwendung in den erfindungsgemäßen Zusammensetzungen geeignet.

Die erfindungsgemäßen Zusammensetzungen enthalten weiter ein Polymerisat (B), welches zu 5 bis 100 Gew.-%, vorzugsweise 20 bis 100 Gew.-% und insbesondere 50 bis 100 Gew.-% aus mindestens einer ethylenisch ungesättigten Mono- oder Dicarbonsäure aufgebaut ist. Das Polymerisat kann auch teilweise oder vollständig in Form eines Salzes vorliegen, bevorzugt ist die saure Form. Sie sind im wesentlichen frei von Carbonsäureanhydridstrukturen.

Das gewichtsmittlere Molekulargewicht der Komponente (B) ist größer als 500 und im allgemeinen kleiner als 5 Millionen. Die K-Werte der Polymerisate (nach H. Finkentscher, Cellulose-Chemie 13 (1932), Seiten 58-64, 71 und 74), die ein Maß für das Molekulargewicht darstellen, liegen im allgemeinen im Bereich von 15 bis 150 (gemessen in 1 gew.-%iger Lösung). Das Polymerisat muß im Mittel mindestens 4 Carbonsäuregruppen davon abgeleitete Salzgruppen pro Polymerkette enthalten.

Brauchbare ethylenisch ungesättigte Carbonsäuren sind insbesondere C₃-C₆-Carbonsäuren wie Acrylsäure, Methacrylsäure, Crotonsäure, Fumarsäure, Maleinsäure, 2-Methylmaleinsäure und Itaconsäure sowie Halbester von ethylenisch ungesättigten Dicarbonsäuren, wie z.B. Maleinsäuremonoalkylester von C₁-C₈-Alkoholen.

Die Polymerisate können auch ausgehend von ethylenisch ungesättigten Mono- oder Dicarbonsäureanhydriden, gegebenenfalls im Gemisch mit den erwähnten Carbonsäuren, erhalten werden. Die Anhydridfunktionen werden unter den Polymerisationsbedingungen, z.B. bei der Lösungs- oder Emulsionspolymerisation im wäßrigen Medium, oder im Anschluß an die Polymerisation durch Umsetzung mit einer Säure oder Base in Carbonsäuregruppen überführt. Brauchbare ethylenisch ungesättigte Carbonsäureanhydride sind insbesondere Maleinsäureanhydrid, Itaconsäureanhydrid, Acrylsäureanhydrid und Methacrylsäureanhydrid.

Neben den bisher genannten Monomeren (Monomere b) kann das Polymerisat noch 0 bis 95 Gew.-%, vorzugsweise 0 bis 80 Gew.-% und insbesondere 0 bis 50 Gew.-% mindestens eines weiteren Monomeren 5 einpolymerisiert enthalten. Brauchbare weitere Monomere sind:

Vinylaromatische Verbindungen wie Styrol, α-Methylstyrol und Vinyltoluole (Monomere b₁).

Lineare 1-Olefine, verzweigtkettige 1-Olefine oder cyclische Olefine (Monomere b₂), wie z.B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C₈-C₁₀-Olefin. 1-Dodecen, C₁₂-C₁₄-olefin, Octadecen, 1-Eicosen (C₂₀), C₂₀-C₂₄-olefin; metallocenkatalytisch hergestellte Oligoolefine mit endständiger Doppelbindung, wie z.B. Oligopropen, Oligohexen und Oligooctadecen; durch kationische Polymerisation hergestellte Olefine mit hohem α-Olefin-Anteil, wie z.B. Polyisobuten. Vorzugsweise ist jedoch kein Ethen oder kein lineares 1-Olefin in das Polymerisat einpolymerisiert.

### Butadien.

Vinyl- und Allylalkylether mit 1 bis 40 Kohlenstoffatomen im 5 Alkylrest, wobei der Alkylrest noch weitere Substituenten wie eine Hydroxylgruppe, eine Amino- oder Dialkylaminogruppe oder eine bzw. mehrere Alkoxylatgruppen tragen kann (Monomere b₃), wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.

Acrylamide und alkylsubstituierte Acrylamide (Monomere b₄), wie z.B. Acrylamid, Methacrylamid, N-tert.-3utylacrylamid, N-Methyl-(meth)acrylamid.

Sulfogruppenhaltige Monomere (Monomere b₅), wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen.

C₁- bis C₈-Alkylester oder C₁- bis C₄-Hydroxyalkylester der Acrylsäure, Methacrylsäure oder Maleinsäure oder Ester von mit 2 bis 50 Mol Ethylenoxid, Propylenoxid, Butylenoxid oder Mischungen davon alkoxylierten C₁- bis C₁₈-Alkoholen mit Acrylsäure, Methacrylsäure oder Maleinsäure (Monomere b₆), wie z.B. Methyl(meth)acrylat, Ethyl(meth)acrylat, Propyl(meth)acrylat, Isopropyl (meth) acrylat, Butyl(meth)acrylat, Hexyl(meth)acrylat, 2-Ethylhexyl (meth)acrylat, Hydroxyethyl(meth)acrylat, Hydroxy-propyl(meth) acrylat, Butandiol-1,4-monoacrylat, Maleinsäuredibutylester, Ethyldiglykolacrylat, Methylpolyglykolacrylat (11 EO), (Meth)acrylsäureester von mit 3,5,7,10 oder 30 Mol Ethylenoxid umgesetztem C₁₃/C₁₅-Oxoalkohol bzw. deren Mischungen.

Alkylaminoalkyl(meth)acrylate oder Alkylaminoalkyl(meth)acrylamide oder deren Quaternisierungsprodukte (Monomere b₇), wie z.B. 2-(N,N-Dimethylamino)ethyl(meth) acrylat, 3-(N,N-Dimethylaminol-propyl(meth) acrylat, 2-(N,N,N-Trimethylammonium)ethyl (meth) acrylat-chlorid, 2-Dimethylaminoethyl(meth)acrylamid, 3-Dimethylaminopropyl(meth)acrylamid, 3-Trimethylammoniumpropyl(meth)acrylamid-chlorid.

Vinyl- und Allylester von C₁- bis C₃₀-Monocarbonsäuren (Monomere b₈), wie z.B. Vinylformiat, Vinylacetat, Vinylpropionat, Vinylbutyrat, Vinylvalerat, Vinyl-2-ethylhexanoat, Vinylnonoat, Vinyldecanoat, Vinylpivalat, Vinylpalmitat, Vinylstearat, Vinyllaurat.

Als weitere Monomere b₉ seien noch genannt:

N-Vinylformamid, N-Vinyl-N-methylformamid, Styrol, α-Methylstyrol, 3-Methylstyrol, Butadien, N-Vinylpyrrolidon, N-Vinylimidazol, 1-Vinyl-2-methylimidazol, 1-Vinyl-2-methyl-imidazolin, N-Vinylcaprolactam, Acrylnitril, Methacrylnitril, Allylalkohol, 2-Vinylpyridin, 4-Vinylpyridin, Diallyldimethylammoniumchlorid, Vinylidenchlorid, Vinylchlorid, Acrolein, Methacrolein und Vinylcarbazol bzw. Mischungen davon.

Bevorzugte weitere Monomere sind die erwähnten Ester der Acrylsäure und Methacrylsäure, die vinylaromatischen Verbindungen, Butadien, Vinylester, (Meth)acrylnitril und die erwähnten (Meth)acrylamide.

Besonders bevorzugte Comonomere sind Methacrylat, Ethylacrylate, Butylacrylate, 2-Ethylhexylacrylat, Methylmethacrylat, Butylmethacrylate, Hydroxyethylacrylate, Hydroxypropylacrylat, Hydroxybutylacrylate, Hydroxyethylmethacrylat, Styrol, Butadien, Vinylacetat, Acrylnitril, Methacrylnitril, Acrylamid, Methacrylamid und/oder N-Butylacrylamid.

Die Polymerisate können nach üblichen Polymerisationsverfahren hergestellt werden, z.B. durch radikalische Substanz-, Emulsions-, Suspensions-, Dispersions-, Fällungs- und Lösungspolymerisation. Bei den genannten Polymerisationsverfahren wird bevorzugt unter Ausschluß von Sauerstoff gearbeitet, vorzugsweise in einem Stickstoffstrom. Für alle Polymerisationsmethoden werden die üblichen Apparaturen verwendet, z.B. Rührkessel, Rührkesselkaskaden, Autoklaven, Rohrreaktoren und Kneter. Bevorzugt wird nach der Methode der Lösungs-, Emulsions-, Fällungs- oder Suspensionspolymerisation gearbeitet. Besonders bevorzugt sind die Methoden der Lösungs- und Emulsionspolymerisation im wäßrigen Medium.

Bei Anwendung der wässrigen radikalischen Lösungspolymerisation erhält man wasserlösliche Polymere und Copolymere, vorzugsweise ausgehend von 50 bis 100 Gew.-% der erwähnten Carbonsäuren, Carbonsäureanhydride, Halbester oder einer Mischung von zwei oder mehreren dieser Verbindungen. Ihr gewichtsmittleres Molekulargewicht liegt im allgemeinen im Bereich von 500 bis 1 000 000, vorzugsweise 2000 bis 200 000. Die K-Werte der Polymerisate liegen im allgemeinen im Bereich von 10 bis 150, vorzugsweise 15 bis 100 (gemessen in 1 gew.-%iger Lösung in Wasser). Der Feststoffgehalt liegt im allgemeinen im Bereich von 10 bis 80 Gew.-%, vorzugsweise 20 bis 65 Gew.-%. Die Polymerisation kann bei Temperaturen 5 von 20 bis 300, vorzugsweise von 60 bis 200°C durchgeführt werden. Die Durchführung der Lösungspolymerisation erfolgt in üblicher Weise, z.B. wie in der EP-A-75 820 oder DE-A-36 20 149 beschrieben.

Bei Anwendung der wässrigen Emulsionspolymerisation erhält man Polymerisate mit einem gewichtsmittleren Molekulargewicht von 1000 bis 2 000 000, vorzugsweise 5000 bis 500 000. Die K-Werte liegen im allgemeinen im Bereich von 15 bis 150 (1 gew.-%ig in Dimethylformamid). Die gewichtsmittlere Teilchengröße (bestimmt mittels Ultrazentrifuge) liegt vorzugsweise im Bereich von 50 bis 1000 nm. Die Dispersion kann monomodale oder polymodale Teilchengrößenverteilung aufweisen. Die Emulsionspolymerisation kann so durchgeführt werden, daß der Feststoffvolumengehalt im Bereich von 20 bis 70 %, vorzugsweise 30 bis 60 % liegt.

Die Durchführung der Emulsionspolymerisation mit den erwähnten Carbonsäuregruppen enthaltenden Monomeren erfolgt in üblicher Weise, z.B. wie in der DE-A-31 34 222 oder der US-A-5,100,582 beschrieben. Dabei liegt der Anteil der Carbonsäuremonomeren bevorzugt zwischen 5 und 50%.

Die Polymerisation wird vorzugsweise in Gegenwart von Radikale bildenden Verbindungen (Initiatoren) durchgeführt. Man benötigt von diesen Verbindungen vorzugsweise 0,05 bis 15, besonders bevorzugt 0,2 bis 8 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme können als Polymerisationsinitiatoren verwendet werden.

Die Initiatoren können allein oder in Mischung untereinander angewendet werden, z.B. Mischungen aus Wasserstoffperoxid und Natriumperoxidisulfat. Für die Polymerisation in wäßrigem Medium werden bevorzugt wasserlösliche Initiatoren eingesetzt.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, C₁- bis C₄-Aldehyde, wie Formaldehyd, Acetaldehyd, Propionaldehyd, Hydroxylammoniumsalze wie Hydroxylammoniumsulfat, Ameisensäure, Natriumbisulfit oder Isopropanol. Die Polymerisationsregler werden im allgemeinen in Mengen von 0,1 bis 10 Gew.-%, bezogen auf die Monomeren eingesetzt.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäureund Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000. Auch Divinylbenzol ist geeignet.

Die Vernetzer werden vorzugsweise in Mengen von 10 ppm bis 5 Gew.-%, bezogen auf die zu polymerisierenden Monomere, eingesetzt.

Wird nach der Methode der Emulsions-, Fällungs-, Suspensionsoder Dispersionspolymerisation gearbeitet, so kann es vorteilhaft sein, die Polymertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Bevorzugt sind anionische Emulgatoren, beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE 2 501 123 beschrieben sind.

Die Emulgatoren oder Schutzkolloide werden üblicherweise in Konzentrationen von 0,05 bis 20 Gew.-%, bezogen auf die Monomere, eingesetzt.

Wird in wäßriger Emulsion, Lösung oder Verdünnung polymerisiert, so können die Monomere vor oder während der Polymerisation ganz oder teilweise durch übliche, anorganische oder organische Basen neutralisiert werden.

Besonders bevorzugt werden die ethylenisch ungesättigten Carbonsäuren vor und während der Polymerisation nicht neutralisiert. Bevorzugt wird auch nach der Polymerisation kein Neutralisierungsmittel, abgesehen vom Alkanolamin B), zugesetzt.

Wird das Polymerisat nach der Methode einer Lösungs-, Fällungsoder Suspensionspolymerisation in einem wasserdampfflüchtigen Lösungsmittel oder Lösungsmittelgemisch hergestellt, so kann das Lösungsmittel durch Einleiten von Wasserdampf abgetrennt werden, um so zu einer wäßrigen Lösung oder Dispersion zu gelangen. Das Polymerisat kann von dem organischen Verdünnungsmittel auch durch einen Trocknungsprozeß abgetrennt werden.

Bevorzugt liegen die Polymerisate (B) in Form einer wäßrigen Dispersion oder Lösung mit Feststoffgehalten von vorzugsweise 10 bis 80 Gew.-%, insbesondere 25 bis 65 Gew.-% vor.

Das Polymerisat (B) kann auch durch Pfropfung von Maleinsäure bzw. Maleinsäureanhydrid bzw. einer Maleinsäure oder Maleinsäureanhydrid enthaltenden Monomermischung auf eine Pfropfgrundlage erhalten werden. Geeignete Pfropfgrundlagen sind beispielsweise Monosaccharide, Oligosaccharide, modifizierte Polysaccharide und Alkylpolyglykolether. Solche Pfropfpolymerisate sind beispielsweise in DE-A-4 003 172 und EP-A-116 930 beschrieben.

Zur Herstellung der erfindungsgemäßen formaldehydfreien Zusammensetzungen werden das Alkanolamin (A) und das Polymerisat (B) bevorzugt in einem solchen Verhältnis zueinander eingesetzt, daß das Molverhältnis von Carboxylgruppen der Komponente (B) zu Hydroxylgruppen der Komponente B) 20:1 bis 1:5, bevorzugt 8:1 bis 1:2 und besonders bevorzugt 4:1 bis 1:1 beträgt.

Die Herstellung der erfindungsgemäßen formaldehydfreien, wäßrigen Bindemittel erfolgt z.B. durch Zugabe des Alkanolamins (A) zur wäßrigen Dispersion oder Lösung der Polymerisate (B). In manchen Fällen ist es zweckmäßig, die wässrige Lösung oder Dispersion des Polymerisates (B) zu dem Alkanolamin (A) zuzugeben. Das Alkanolamin (A) kann entweder unverdünnt oder als wässrige Lösung verwendet werden, deren Konzentration bevorzugt > 25% liegt.

Die Zugabe kann bei Raumtemperatur oder aber auch bei erhöhter Temperatur, z.B. bei 90°C, erfolgen.

Die Viskosität der erfindungsgemäßen wässrigen Zusammensetzungen (A) und (B) liegt bei einem Gehalt von aktiven Inhaltsstoffen von 40 Gew.-% im allgemeinen im Bereich von 10 bis 100 000 mPa.s, gemessen in einem Rotationsviskosimeter gemäß DIN 53019 bei 23°C und einer Schergeschwindigkeit von 250 sec⁻¹. Bevorzugt sind Viskositäten von 20 bis 20000 mPa.s, besonders bevorzugt von 50 bis 5000 mPa.s.

Ist die Komponente (B) ein Emulsionspolymerisat, so lassen sich damit bei vergleichbaren Molekulargewicht oder K-Wert Zusammensetzungen mit niedrigerer Viskosität herstellen als mit homogen gelösten, säurehaltigen Polymerisaten.

Die erfindungsgemäßen Zusammensetzungen können einen Reaktionsbeschleuniger enthalten, vorzugsweise jedoch liegen sie ohne einen derartigen Reaktionsbeschleuniger vor. Geeignete Reaktionsbeschleuniger sind z.B. Alkalimetallhypophosphite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Weiterhin sind als Katalysatoren geeignet starke Säuren wie z.B. Schwefelsäure, p-Toluolsulfonsäure. Auch polymere Sulfonsäuren, wie z.B. Poly(acrylamido-2-methylpropansulfonsäure), Poly(vinylsulfonsäure), Poly(p-styrolsulfonsäure), Pcly(sulfopropylmethacrylat) und polymere Phosphonsäuren wie z.B. Poly(vinylphosphonsäure) sowie davon abgeleitete Copolymere mit den oben beschriebenen Comonomeren sind geeignet.

Es ist weiterhin möglich, die beschleunigend wirkende Sulfonsäure oder Phosphonsäure in das säurehaltige Polymerisat (B) einzubauen, indem man die entsprechenden Monomere wie z.B. Acrylamido-2-methylpropansulfonsäure, Vinylsulfonsäure, p-Styrolsulfonsäure, Sulfopropylmethacrylat oder Vinylphosphonsäure bei der Herstellung der polymeren Carbonsäuren als Comonomer verwendet.

Weiterhin als Katalysatoren geeignet sind Organotitanate und Organzirkonate wie z.B. Triethanoltitanat, Titanchelat ETAM und Tetrabutylzirkonat, die z.B. von der Fa. Hüls vertrieben werden.

Ferner können die erfindungsgemäßen Zusammensetzungen wenigstens ein Di- oder Trialkanolamin enthalten. Im allgemeinen verwendet man 0,5 bis 200 Gew.-%, bezogen auf die Menge an Komponente (A). Bevorzugt verwendet man Di- oder Triethanolamin.

Weiter können die erfindungsgemäßen Zusammensetzungen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wäßrige Paraffindispersionen oder Silicone. Weiter können die Zusammensetzungen Netzmittel, Verdickungsmittel, Plastifizierungsmittel, Retentionsmittel, Pigmente und Füllstoffe enthalten.

Schließlich können die erfindungsgemäßen Zusammensetzungen übliche Brandschutzmittel, wie z.B. Aluminiumsilikate, Aluminiumhydroxide, Borate und/oder Phosphate enthalten.

Häufig enthalten die Zusammensetzungen auch Kupplungsreagenzien, wie Alkoxysilane, beispielsweise 3-Aminopropyltriethoxysilan, lösliche oder emulgierbare Öle als Gleitmittel und Staubbindemittel sowie Benetzungshilfsmittel.

Die erfindungsgemäßen Zusammensetzungen können auch in Abmischung mit Bindemitteln, wie beispielsweise Harnstoff-Formaldehyd-Harzen, Melamin-Formaldehyd-Harzen oder Phenol-Formaldehyd-Harzen, eingesetzt werden.

Die erfindungsgemäßen Zusammensetzungen sind formaldehydfrei. Formaldehydfrei bedeutet, daß die erfindungsgemäßen Zusammensetzungen keine wesentlichen Mengen an Formaldehyd enthalten und auch bei Trocknung und/oder Härtung keine wesentlichen Mengen an Formaldehyd freigesetzt werden. Im allgemeinen enthalten die Zusammensetzungen < 100 ppm Formaldehyd. Sie ermöglichen die Herstellung von Formkörpern mit kurzer Härtungszeit und verleihen den Formkörpern ausgezeichnete mechanische Eigenschaften.

Die erfindungsgemäßen thermisch härtbaren, formaldehydfreien Zusammensetzungen sind bei der Anwendung im wesentlichen unvernetzt und daher thermoplastisch. Wenn erforderlich, kann jedoch ein geringer Grad an Vorvernetzung eingestellt werden.

Beim Erhitzen verdampft das in der Zusammensetzung enthaltene Wasser und es kommt zur Härtung der Zusammensetzung. Diese Prozesse können nacheinander oder gleichzeitig ablaufen. Unter Härtung wird in diesem Zusammenhang die chemische Veränderung der Zusammensetzung verstanden, z.B. die Vernetzung durch Knüpfung von kovalenten Bindungen zwischen den verschiedenen Bestandteilen der Zusammensetzungen, Bildung von ionischen Wechselwirkungen und Clustern, Bildung von Wasserstoffbrücken. Weiterhin können bei der Härtung auch physikalische Veränderungen im Bindemittel ablaufen, wie z.B. Phasenumwandlungen oder Phaseninversion.

Als Folge der Härtung nimmt die Löslichkeit der Zusammensetzung ab, beispielsweise werden wasserlösliche Zusammensetzungen in teilweise bis weitgehend wasserunlösliche Materialien überführt.

Der Härtungsgrad läßt sich charakterisieren durch Extraktionsversuche an den gehärteten Zusammensetzungen in geeigneten Lösungsmitteln wie z.B. Wasser oder Aceton. Je höher der Aushärtungsgrad, desto mehr gehärtetes Material bleibt unlöslich, d.h. desto höher ist sein Gelanteil.

Die Härtungstemperaturen liegen zwischen 75 und 250°C, bevorzugt zwischen 90 und 200°C. Die Dauer und die Temperatur der Erwärmung beeinflussen den Aushärtungsgrad. Ein Vorteil der erfindungsgemäßen Zusammensetzungen ist, daß ihre Härtung bei vergleichsweise niedrigen Temperaturen erfolgen kann. So findet beispielsweise schon bei 100 bis 130°C eine deutliche Vernetzung statt.

Die Aushärtung kann auch in zwei oder mehr Stufen erfolgen. So kann z.B. in einem ersten Schritt die Härtungstemperatur und -zeit so gewählt werden, daß nur ein geringer Härtungsgrad erreicht wird und weitgehend vollständige Aushärtung in einem zweiten Schritt erfolgt. Dieser zweite Schritt kann räumlich und zeitlich getrennt vom ersten Schritt erfolgen. Dadurch wird beispielsweise die Verwendung der erfindungsgemäßen Zusammensetzungen zur Herstellung von mit Bindemittel imprägnierten Halbzeugen i möglich, die an anderer Stelle verformt und ausgehärtet werden können.

Die Zusammensetzungen werden insbesondere als Bindemittel für die Herstellung von Formkörpern aus Fasern, Schnitzeln oder Spänen verwendet. Dabei kann es sich um solche aus nachwachsenden Rohstoffen oder um synthetische oder natürliche Fasern, z.B. aus Kleiderabfällen handeln. Als nachwachsende Rohstoffe seien insbesondere Sisal, Jute, Flachs, Kokosfasern, Bananenfasern, Hanf und Kork genannt. Besonders bevorzugt sind Holzfasern oder Holzspäne.

Die Formkörper haben bevorzugt eine Dichte von 0,2 bis 1,0 g/cm³ bei 23°C.

Als Formkörper kommen insbesondere Platten in Betracht. Die Dicke der Platten beträgt im allgemeinen mindestens 1 mm, vorzugsweise i mindestens 2 mm. In Betracht kommen auch Automobilinnenteile, z.B. Türinnenverkleidungen, Armaturenträger, Hutablagen.

Die Gewichtsmenge des verwendeten Bindemittels beträgt im allgemeinen 0,5 bis 40 Gew.-%, vorzugsweise 1 bis 30 Gew.-% (Bindemittel fest, berechnet als Summe A + B), bezogen auf das Substrat (Fasern, Schnitzel oder Späne).

Die Fasern, Schnitzel oder Späne können direkt mit dem Bindemittel beschichtet werden oder mit dem wäßrigen Bindemittel vermischt werden. Die Viskosität des wäßrigen Bindemittels wird vorzugsweise (insbesondere bei der Herstellung von Formkörpern aus Holzfasern oder Holzspänen) auf 10 bis 10 000, besonders bevorzugt auf 50 bis 5 000 und ganz besonders bevorzugt auf 100 bis 2500 mPa·s (DIN 53019, Rotationsviskosimeter bei 250 sec⁻¹) eingestellt.

Die Mischung aus Fasern, Schnitzeln und Spänen und dem Bindemittel kann z.B. bei Temperaturen von 10 bis 150°C vorgetrocknet werden und anschließend zu den Formkörpern, z.B. bei Temperaturen von 50 bis 250°C, vorzugsweise 100 bis 240°C und besonders bevorzugt 120 bis 225°C und Drücken von im allgemeinen 2 bis 1000 bar, vorzugsweise 10 bis 750 bar, besonders bevorzugt 50 bis 500 bar zu den Formkörpern verpreßt werden.

Die Bindemittel eignen sich insbesondere zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz, wie z.B. Holzspänen und Holzfasern, hergestellt werden können. Die 5 Wasserfestigkeit von Holzwerkstoffen kann erhöht werden, indem man dem Bindemittel eine handelsübliche wäßrige Paraffindispersion oder andere Hydrophobierungsmittel zusetzt, bzw. diese Hydrophobierungsmittel vorab oder nachträglich den Fasern, Schnitzeln oder Spänen zusetzt.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Es werden bevorzugt Späne eingesetzt, deren mittlere Spangröße zwischen 0,1 und 4 mm, insbesondere 0,2 und 2 mm liegt, und die weniger als 6 Gew.-% Wasser enthalten. Es können jedoch auch deutlich grobteiligere Späne und solche mit höherem Feuchtigkeitsgehalt eingesetzt werden. Das Bindemittel wird möglichst gleichmäßig auf die Holzspäne aufgetragen, wobei das Gewichtsverhältnis Bindemittel:Holzspäne bezogen auf die aktiven Inhaltsstoffe (berechnet als A) + B)) vorzugsweise 0,02:1 bis 0,3:1 beträgt. Eine gleichmäßige Verteilung läßt sich beispielsweise erreichen, indem man das Bindemittel in feinverteilter Form auf die Späne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100 bis 250°C, bevorzugt von 120 bis 225°C durch Anwendung von Drücken von üblicherweise 10 bis 750 bar zu einer Platte verpreßt. Die benötigten Preßzeiten können in einem weiten Bereich variieren und liegen im allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180°C hergestellt werden.

Zur Beleimung werden die Holzfasern im allgemeinen mit einem Luftstrom aufgewirbelt und das Bindemittel in den so erzeugten Fasernstrom eingedüst ("Blow-Line" Verfahren). Das Verhältnis Holzfasern zu Bindemittel bezogen auf den Trockengehalt bzw. Feststoffgehalt beträgt üblicherweise 40:1 bis 2:1, bevorzugt 20:1 bis 4:1. Die beleimten Fasern werden in dem Fasernstrom bei Temperaturen von z.B. 130 bis 180°C getrocknet, zu einem Faservlies ausgestreut und bei Drücken von 20 bis 40 bar zu Platten oder Formkörpern verpreßt.

Die beleimten Holzfasern können auch, wie z.B. in der DE-OS 2 417 243 beschrieben, zu einer transportablen Fasermatte verarbeitet werden. Dieses Halbzeug kann dann in einem zweiten, zeitlich und räumlich getrennten Schritt zu Platten oder Formteilen, wie z.B. Türinnenverkleidungen von Kraftfahrzeugen weiterverarbeitet werden.

Auch andere Naturfaserstoffe wie Sisal, Jute, Hanf, Flachs, Kokosfasern, Bananenfasern und andere Naturfasern können mit den Bindemitteln zu Platten und Formkörpern verarbeitet werden. Die Naturfaserstoffe können auch in Mischungen mit Kunststoffasern, z.B. Polypropylen, Polyethylen, Polyester, Polyamide oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den erfindungsgemäßen Bindemitteln imprägniert werden, gegebenenfalls unter Zusatz eines Benetzungshilfsmittels. Die imprägnierten Matten werden dann im bindemittelfeuchten oder vorgetrockneten Zustand z.B. bei Temperaturen zwischen 100 und 250°C und Drücken zwischen 10 und 100 bar zu Platten oder Formteilen verpreßt.

Die erfindungsgemäß erhaltenen Formkörper haben eine geringe Wasseraufnahme, eine niedrige Dickenquellung nach Wasserlagerung, eine gute Festigkeit und sind formaldehydfrei.

Außerdem kann man die erfindungsgemäßen Zusammensetzungen als Bindemittel für Beschichtungs- und Imprägniermassen für Platten aus organischen und/oder anorganischen Fasern, nicht fasrigen mineralischen Füllstoffen sowie Stärke und/oder wäßrigen Polymerisatdispersionen verwenden. Die Beschichtungs- und Imprägniermassen verleihen den Platten einen hohen Biegemodul. Die Herstellung derartiger Platten ist bekannt.

Derartige Platten werden üblicherweise als Schalldämmplatten eingesetzt. Die Dicke der Platten liegt üblicherweise im Bereich von etwa 5 bis 30 mm, bevorzugt im Bereich von 10 bis 25 mm. Die Kantenlänge der quadratischen oder rechteckigen Platten liegt üblicherweise im Bereich von 200 bis 2000 mm.

Ferner können die erfindungsgemäßen Zusammensetzungen in der Beschichtungs- und Imprägnierungstechnologie übliche Hilfsstoffe enthalten. Beispiele hierfür sind feinteilige inerte Füllstoffe, wie Aluminiumsilikate, Quarz, gefällte oder pyrogene Kieselsäure, Leicht- und Schwerspat, Talkum, Dolomit oder Calciumcarbonat; farbgebende Pigmente, wie Titanweiß, Zinkweiß, Eisenoxidschwarz etc., Schauminhibitoren, wie modifizierte Dimethylpolysiloxane, und Haftvermittler sowie Konservierungsmittel.

Die Komponenten (A) und (B) sind in der Beschichtungsmasse im allgemeinen in einer Menge von 1 bis 65 Gew.-% enthalten. Der Anteil der inerten Füllstoffe liegt im allgemeinen bei 0 bis 85 Gew.-%, der Wasseranteil beträgt mindestens 10 Gew.-%.

Die Zubereitung der erfindungsgemäßen Zusammensetzungen erfolgt in einfacher Weise durch Einrühren der gegebenenfalls mit zu verwendenden Zusatzstoffe in die Zusammensetzung.

Die Anwendung der Zusammensetzungen erfolgt in üblicher Weise durch Auftragen auf ein Substrat, beispielsweise durch Sprühen, Rollen, Gießen oder Imprägnieren. Die aufgetragenen Mengen, bezogen auf die Summe der in der Zusammensetzung enthaltenen Komponenten (A) und (B), betragen im allgemeinen 2 bis 100 g/m².

Die einzusetzenden Mengen an Zusatzstoffen sind dem Fachmann bekannt und richten sich im Einzelfall nach den gewünschten Eigenschaften und dem Anwendungszweck.

Die erfindungsgemäßen Zusammensetzungen sind auch als Bindemittel für Dämmstoffe aus anorganischen Fasern, wie Mineralfasern und Glasfasern brauchbar. Solche Dämmstoffe werden technisch durch Verspinnen von Schmelzen der entsprechenden mineralischen Rohstoffe hergestellt, siehe US-A-2,550,465, US-A-2,604,427, US-A-2,830,648, EP-A-354 913 und EP-A-567 480. Die Zusammensetzung wird dann auf die frisch hergestellten, noch heißen anorganischen Fasern aufgesprüht. Das Wasser verdampft dann weitgehend und die Zusammensetzung bleibt im wesentlichen unausgehärtet als Viskosemasse auf den Fasern haften. Eine auf diese Weise hergestellte endlose, bindemittelhaltige Fasermatte wird von geeigneten Förderbändern durch einen Härtungsofen weitertransportiert. Dort härtet die Matte bei Temperaturen im Bereich von ca. 100 bis 200°C zu einer steifen Matrix aus. Nach dem Härten werden die i Dämmstoffmatten in geeigneter Weise konfektioniert.

Der überwiegende Anteil der in den Dämmstoffen verwendeten Mineral- oder Glasfasern hat einen Durchmesser im Bereich von 0,5 bis 20 µm und eine Länge im Bereich von 0,5 bis 10 cm.

Die erfindungsgemäßen Zusammensetzungen eignen sich außerdem als Bindemittel für Faservliese.

Als Faservliese seien z. B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z.B. Aramid-, Kohlenstoff-, Polyacrylnitril-, Polyester-, Mineral-, PVC- oder Glasfasern genannt.

Im Falle der Verwendung als Bindemittel für Faservliese können die erfindungsgemäßen Zusammensetzungen z. B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d.h. verfestigt.

Dazu wird das erfindungsgemäße Bindemittel vorzugsweise im Gewichtsverhältnis Faser/Polymerisat A (fest) von 10:1 bis 1:1, besonders bevorzugt von 6:1 bis 3:1 auf das Rohfaservlies z.B. durch Beschichten, Imprägnieren, Tränken aufgebracht.

Das Bindemittel wird dabei vorzugsweise in Form einer verdünnten wäßrigen Zubereitung mit 95 bis 40 Gew.-% Wasser verwendet.

Nach dem Aufbringen des Bindemittels auf das Rohfaservlies erfolgt im allgemeinen eine Trocknung vorzugsweise bei 100 bis 400, insbesondere 130 bis 280°C, ganz besonders bevorzugt 130 bis 230°C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Die erfindungsgemäßen Bindemittel erlauben insbesondere kurze Trocknungszeiten und auch niedrige Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z.B. aus PVC.

Bei der Verwendung als Dachbahnen werden die gebundenen Faservliese im allgemeinen mit Bitumen beschichtet.

Aus den erfindungsgemäßen wäßrigen Zusammensetzungen lassen sich weiterhin geschäumte Platten oder Formkörper herstellen. Dazu wird zunächst das in der Zusammensetzung enthaltene Wasser bei Temperaturen von < 100°C bis zu einem Gehalt von < 20 Gew.-% entfernt. Die so erhaltene viskose Zusammensetzung wird dann bei Temperaturen > 100°C, vorzugsweise bei 120 bis 300°C, verschäumt. Als Treibmittel dient dabei das in der Mischung noch enthaltene Restwasser und/oder die bei der Härtungsreaktion entstehenden gasförmigen Spaltprodukte. Die entstehenden vernetzten Polymerschäume können beispielsweise zur Wärmedämmung und zur Schallisolierung eingesetzt werden.

Mit den erfindungsgemäßen Zusammensetzungen lassen sich durch Imprägnierung von Papier und anschließende schonende Trocknung nach den bekannten Verfahren sogenannte Laminate, z.B. für dekorative Anwendungen, herstellen. Diese werden in einem zweiten Schritt auf das zu beschichtende Substrat unter Einwirkung von Hitze und Druck auflaminiert, wobei die Bedingungen so gewählt werden, daß es zur Aushärtung des Bindemittels kommt.

Die erfindungsgemäßen Zusammensetzungen sind weiterhin geeignet als formaldehydfreie Kernsandbindemittel zur Herstellung von Gußformen und Kernen für den Metallguß nach den üblichen Verfahren. Sie eignen sich auch als Bindemittel für die Herstellung von Schleifpapieren und Schleifkörpern nach Verfahren, wie sie üblicherweise bei Phenoharzen praktiziert werden.

Die nachfolgenden Beispiele erläutern die Erfindung. Die K-Werte wurden in 1 gew.-%iger Lösung (Wasser oder Dimethylformamid) bestimmt.

### Beispiele

### Beispiel A:

Herstellung der alkoxylierten Polyamine durch Umsetzung von Polyaminen mit Alkylenoxiden:

2390 g einer 55%igen wäßrigen Lösung eines Polyethylenimins (mittleres Molekulargewicht, ermittelt über Lichtstreuung: M_{w} = 800, Verhältnis von primären zu sekundären zu tertiären Stickstoffgruppen von 4,4:3,8:1,8) werden im einem 5 l Edelstahlautoklaven vorgelegt. Der Reaktor wird verschlossen und mit Stickstoff gespült. Man erwärmt unter Rühren auf 90°C und gibt bei dieser Temperatur 1408 g (30 mol) Ethylenoxid im Verlauf von 5 bis 6 Stunden bei einem maximalen Druck von 5 bar zu. Nach beendeter Zugabe und Erreichen der Druckkonstanz hält man noch zwei Stunden bei 90°C. Danach wird auf 40°C abgekühlt und entspannt. Die Reaktionsmischung wird noch eine Stunde bei 40°C bei einem Druck von 50 mbar entgast. Man isoliert 3650 g einer klaren, fast farblosen Lösung mit einem Gehalt an oxalkyliertem Polyethylenimin von ca. 75%.

Die Viskosität der Lösungen wird bestimmt gemäß DIN 53019 bei 23°C und einer Schergeschwindigkeit von 250 sec-1 mit einem Contraves Rheomat 115.

Die Lösungen A2 bis A5 werden auf analoge Weise hergestellt:

| Lösung | Polyamin | mol Alkylenoxid pro mol NH-Gruppe | Wassergehalt der Lösung (%) | pH | Viskosität bei 250 sec-1 (mPa.s) |
|---|---|---|---|---|---|
| A1 | Polyethylenimin Mw = 800 | 1,05 mol EO | 25 | 13,7 | 3100 |
| A2 | Ethylendiamin | 1,0 mol EO | 18 | 12,9 | 560 |
| A3 | Ethylendiamin | 1,0 mol PO | 25 | 10,2 | 280 |
| A4 | Hexamethylendiamin | 1,05 mol EO | 24 | 13,6 | 340 |
| A5 | Diethylentriamin | 0,92 mol EO | 23 | 13,5 | 580 |
| EO = Ethylenoxid | | | | | |
| PO = Propylenoxid | | | | | |

### Beispiel B:

Zu 400 g einer 50%igen wäßrigen Lösung eines Copolymerisates enthaltend 55 Gew.-% Acrylsäure-Einheiten und 45% Maleinsäure-Einheiten (K-Wert einer 1%igen wäßrigen Lösung = 11; pH : 1,6; Viskosität 140 mPas) werden bei Raumtemperatur 79 g der 76%igen wäßrigen Lösung A 4 unter Rühren in 10 min zugegeben. Anschließend werden bei Raumtemperatur 46 g 25%ige wäßrige Ammoniak-Lösung unter Rühren innerhalb von 5 min zugegeben.

| | |
|---|---|
| Aktive Inhaltsstoffe | 51,7% (aktive Inhaltsstoffe sind alle Bestandteile der Zusammensetzung außer Wasser) |
| Viskosität | 280 mPas |
| pH | 4,1 |

### Beispiel C:

Zu 500 g einer 50%igen wäßrigen Lösung des Copolymerisates aus Beispiel B werden bei 80°C 33,3 g der Lösung des ethoxylierten Polyethylenimins A1 unter Rühren zugegeben.

| | |
|---|---|
| Aktive Inhaltsstoffe | 51,6% |
| Viskosität | 580 mPas |
| pH | 1,9 |

### Beispiel D:

Herstellung der Polymerisatdispersion D1:

Ein Gemisch bestehend aus

| | |
|---|---|
| 220 g | Wasser |
| 0,5 g | einer handelsüblichen 28 Gew.-%igen wäßrigen Lösung des Natriumsalzes eines Gemisches aus Schwefelsäurehalbestern von ethoxylierten C12/C14-Fettalkoholen (mittlerer Ethoxylierungsgrad = 2,8) = Emulgatorlösung i |
| 20 g | Zulauf 1 |

wurde auf 85°C erhitzt und unter Aufrechterhaltung der Temperatur von 85°C zeitgleich beginnend während 2h mit der Restmenge des Zulauf 1 und dazu synchron mit Zulauf 2 kontinuierlich versetzt. Anschließend wurde noch lh bei 85°C gerührt.

| | |
|---|---|
| Zulauf 1 | 3 g Natriumperoxodisulfat 100 g Wasser |
| Zulauf 2 | 210 g Methylmethacrylat 90 g Methacrylsäure 15,6 g Emulgatorlösung i 391 g Wasser |

Der K-Wert des resultierenden Emulsionspolymerisates (1%ige Di-methylformamid-Lösung) betrug 63.

### Herstellung der Zusammensetzung

Zu 450 g der auf einen Feststoffgehalt von 10% verdünnten wäßrigen Polymerdispersion werden unter Rühren bei Raumtemperatur 23 g der 82%igen Lösung A2 und 0,8 g des Titanchelates ETAM (Fa. Hüls) gegeben.

| | |
|---|---|
| Aktive Inhaltsstoffe | 13,6% |
| Viskosität | 920 mPas |
| pH | 6,4 |

### Beispiel E:

Zu 450 g einer 25%igen Lösung eines Copolymerisates, enthaltend 70 Gew.-% Methacrylsäureeinheiten und 30 Gew.-% Acrylsäureeinheiten (K-Wert: 17; pH 1,1, Viskosität 190 mPas), werden bei Raumtemperatur 36,5 g der 77%igen Lösung des ethoxylierten Diethylentriamins A5 und 5,6 g einer 50%igen, wäßrigen Natriumhypophosphit-Lösung zugegeben.

| | |
|---|---|
| Aktive Inhaltsstoffe | 29,1% |
| Viskosität | 240 mPas |
| pH | 3,8 |

### Beispiel F:

Zu 425 g einer 40%igen wäßrigen Lösung eines Copolymerisates aus 85 Gew.-% Acrylsäure und 15 Gew.-% Ethylacrylat, synthetisiert nach Beispiel 9 der DE-A-36 20 149, wurden bei Raumtemperatur unter Rühren 88,5 g der 77%igen Lösung des ethoxylierten Diethylentriamins A5 zugegeben.

| | |
|---|---|
| Aktive Inhaltsstoffe | 46,5% |
| Viskosität | 4800 mPas |
| pH | 4,1 |

### Beispiel G:

100 g eines handelsüblichen Copolymerisates von 60 Gew.-% Styrol und 40 Gew.-% Acrylsäure (Molekulargewicht Mn = 1200) wurden in einer Mischung aus 372 g Wasser, 19 g 25%iger NH₃-Lösung und 80 g der 82%igen Lösung des ethoxylierten Ethylendiamins A2 unter Rühren aufgelöst.

| | |
|---|---|
| Aktive Inhaltsstoffe | 30% |
| Viskosität | 15 mPas |
| pH | 8,5 |

### Beispiel H:

Zu 470 g einer handelsüblichen 35%igen wäßrigen Polyacrylsäure-Lösung, (Molekulargewicht Mw = 100 000, pH = 0,9 , Viskosität 140 mPas), wurden bei Raumtemperatur 33 g der 76%igen wäßrigen Lösung A4 zugegeben.

| | |
|---|---|
| Aktive Inhaltsstoffe | 39,2 Gew.-% |
| Viskosität | 1910 mPas |
| pH-Wert | 4,2 |
| Gelanteil | Die Mischung wird in eine Silikonform gegossen und bei 50°C im Umluftofen getrocknet. Die Dicke des entstehenden Filmes liegt zwischen 0,5 und 1 mm. Etwa 1 g des so hergestellten Filmes werden 15 min bei 130°C an der Luft gehärtet. Der gehärtete Film wird 48 h in destilliertem Wasser bei 23°C gelagert. Aus dem Gewicht des wassergelagerten Filmes nach Rücktrocknung bis zur Gewichtskonstanz im Verhältnis zum Gewicht des Filmes vor der Wasserlagerung wird der Gelanteil (d.h. der ganz oder teilweise vernetzte, in Wasser unlösliche Anteil) des Bindemittels berechnet. Er beträgt im vorliegenden Beispiel 74%. |

### Beispiel I:

250 g der 50%igen wäßrigen Lösung des Copolymerisates aus Beispiel B und 290 g einer 43,5%igen wäßrigen Lösung eines durch radikalische Polymerisation hergestellten Copolymerisates (K-Wert der 1%igen wäßrigen Lösung = 30; pH = 0,5; Viskosität = 2100 mPas bei 250 sec⁻¹), bestehend aus 80 Gew.-% Acrylsäure und 20 Gew.-% Maleinsäure, wurden gemischt. Zu dieser Mischung wurden bei Raumtemperatur 50 g der 75%igen Lösung des ethoxylierten Polyethylenimins A1 zugegeben.

| | |
|---|---|
| Aktive Inhaltsstoffe | 49,8 Gew.-% |
| Viskosität | 3700 mPas |
| pH-Wert | 2,0 |
| Gelanteil | 85% |

### Beispiel J:

Zu 500 g der 50%igen wäßrigen Lösung des Copolymerisates aus Beispiel B wurde bei Raumtemperatur unter Rühren eine Mischung aus 50 g der 75%igen Lösung des ethoxylierten Polyethylenimins A1 und 37,5 g Triethanolamin innerhalb von 5 min zugegeben.

| | |
|---|---|
| Aktive Inhaltsstoffe | 55,3 Gew.-% |
| Viskosität | 960 mPas |
| pH-Wert | 2,7 |
| Gelanteil | 83% |

### Beispiel K:

Zu 500 g einer 25%igen Lösung eines Copolymerisates des Beispiels E werden bei Raumtemperatur 46,8 g der 75%igen Lösung des propoxylierten 1,2-Ethylendiamins A3 unter Rühren zugegeben.

Vergleichsbeispiel A (Beispiel 14, Probe 33 der EP-A-651 088):

Aus 100 g Polyacrylsäure (Mw = 10000, 25% mol% der Carbonsäuregruppen mit NaOH neutralisiert), 10 g Triethanolamin und 5 g Natriumhypophosphit wird eine 40%ige wäßrige Lösung hergestellt.

| | |
|---|---|
| pH | 4,5 |
| Viskosität | 130 mPas |
| Aktive Inhaltsstoffe | 40 Gew.-% |
| Gelanteil | 0% |

### Vergleichsbeispiel B:

handelsübliches Phenol-Formaldehydharz: "Kauresin Leim 259 flüssig"

### Beispiel L:

### Herstellung von Spanplatten:

In einem Taumelmischer werden zu 100 g Holzspänen (mittlere Größe: 1,2 mm, 95 Gew.-% der Späne haben eine Größe zwischen 0,3 mm und 2,5 mm) innerhalb von 1 min soviel des angegebenen wäßrigen Bindemittels zugegeben, daß der Gewichtsanteil der aktiven Inhaltsstoffe des Bindemittels, bezogen auf das Trockengewicht der Holzspäne, 10% beträgt.

Nach einer Mischzeit von 2 min werden die mit Bindemittel imprägnierten Holzspäne in eine 20 x 20 cm große Preßform gestreut und vorverdichtet. Anschließend werden die Späne 10 min mit einer Laborpresse bei einem Preßdruck von 50 bar und einer Pressentemperatur von 190°C zu einer Spanplatte mit einer Dichte von ca. 0,6 bis 0,9 g/cm³ und einer Dicke zwischen 6 und 8 mm verpreßt.

Prüfung der Spanplatten:

Die Biegefestigkeit und der Elastizitätsmodul E_{b} der Spanplatten wird gemäß DIN 52362 bestimmt.

### Wasseraufnahme:

Prüfkörper der Größe 2,5 x 2,5 cm werden 2 h bei 23°C in Wasser gelagert. Durch Auswiegen der Platten nach Abtupfen des oberflächlich anhängenden Wassers wird die prozentuale Gewichtszunahme der Platten bestimmt.

Dickenquellung:

Ebenso wird die prozentuale Zunahme der Plattendicke infolge der Wasserlagerung mittels einer Schublehre bestimmt.

| Probe | Bindemittel | Dichte der Platte (g/cm³) | Biegefestigkeit bei 23°C/60°C (N/mm²) | E-Modul bei 23°C/60°C (N/mm²) | Wasseraufnahme nach 2 h (%) | Dickenquellung nach 2 h (%) |
|---|---|---|---|---|---|---|
| 1 | B | 0,74 | 33/21 | 3560/2380 | 53 | 21 |
| 2 | C | 0,84 | 29/19 | 3470/2220 | 20 | 16 |
| 3 | H | 0,86 | 25/20 | 3100/2410 | 44 | 21 |
| 4 | J | 0,74 | 31/20 | 3740/3120 | 55 | 28 |
| 5 | K | 0,82 | 28/24 | 3430/2650 | 42 | 25 |
| 6 | VA | 0,70 | 21/11 | 2590/1840 | 88 | 50 |

### Beispiel M

### Herstellung und Prüfung von Platten aus Korkschnitzeln

In einem Taumelmischer wurden zu 65 g Korkschnitzeln (Schüttdichte 65 g/l, mittlere Größe: 1 mm) 25 g 46,5%ige Bindemittel-Zusammensetzung aus Beispiel F zugegeben. Die mit Bindemittel imprägnierten Korkschnitzel wurden bei 70°C getrocknet und anschließend in einer 15 x 15 cm großen Form bei 190°C für 5 min bei einem Preßdruck von 50 bar zu Platten von 2 mm Dicke verpreßt. Die mechanischen Eigenschaften der Platten wurden im Zugversuch nach DIN 53504 geprüft.

| | |
|---|---|
| Dichte | 0,14 g/cm³ Reißfestigkei |
| Reißfestigkeit | 5,2 N/mm² |
| Reißdehnung | 2% |

### Beispiel N

### Herstellung und Prüfung von Platten hergestellt aus Flachsfasermatten

100 g der Bindemittel-Zusammensetzung G werden mit 4 g des 50%igen wäßrigen Hydrophobierungsmittel-Zusammensetzung Mobilcer 736 gemischt. Eine Flachsfasermatte (Flächengewicht 410 g/m²) wird mit dieser Mischung getränkt, so daß die Matte 25 Gew.-% aktive Inhaltsstoffe, bezogen auf das Gewicht der trockenen Fasern, enthält. Drei Lagen der imprägnierten Matte werden in einer beheizten Presse bei einer Pressentemperatur von 190°C für 3 min zu 2 mm dicken Platten verpreßt.

| | |
|---|---|
| Dichte | 0,83 g/cm³ |
| Biegefestigkeit bei 23°C | 48 N/mm² |
| Biegefestigkeit bei 100°C | 34 N/mm² |
| E-Modul bei 23°C | 5860 N/mm² |
| E-Modul bei 100°C | 4360 N/mm² |
| Wasseraufnahme nach 24 h | 30% |
| Dickenquellung nach 24 h | 28% |

### Beispiel 0

### Beschichtung und Prüfung von Mineralfaserplatten:

Auf eine handelsübliche 16 mm dicke Akustikplatte, die als Bindemittel Stärke enthielt, wurden mit einem Pinsel auf der Dekorseite die in der Tabelle angegebenen Beschichtungsmassen aufgetragen. Die Auftragsmenge betrug jeweils 100 g aktive Bestandteile/m². Die Platten wurden 15 min bei 200°C getrocknet.

Der Biegemodul der unbeschichteten und beschichteten Platten wurde gemäß DIN 53362 bei 23°C und bei 60°C geprüft. Die Abmessungen der Prüfkörper betrugen 25 x 5 x 1,6 cm.

Prüfergebnisse:

| Beschichtungsmasse | Elastizitätsmodul E_{b} bei 23°C (N/mm²) | Elastizitätsmodul E_{b} bei 60°C (N/mm²) |
|---|---|---|
| ohne | 130 | 120 |
| Beisp. D | 210 | 200 |
| Beisp. I | 190 | 180 |

### Beispiel P

### Herstellung von Prüfkörpern aus Basalt-Schmelzperlen

300 g Basalt-Schmelzperlen (fallen an bei Herstellung von Mineralfasern aus der Schmelze, mittlere Korngröße 0,2 mm) wurden mit Bindemittel-Zusammensetzung bei Raumtemperatur vermischt (5 Gew.-% Bindemittel-Aktivsubstanz bezogen auf Schmelzperlen. Aus der feuchten Mischung wird ein Prüfkörper (Fischer-Riegel) mit den Abmessungen 17 x 2,3 x 2,3 cm geformt und 2 h bei 200°C ausgehärtet.

Die Biegefestigkeit der so hergestellten Fischerriegel wird im trockenen Zustand bei 23°C im Dreipunktbiegeversuch bestimmt.

Ein weiterer Fischer-Riegel wird eine Stunde in destilliertem Wasser bei 23°C gelagert. Bestimmt wird die Wasseraufnahme des Prüfkörpers und seine Biegefestigkeit im nassen Zustand bei 23°C Wasseraufnahme nach 1 h in destilliertem Wasser bei 23°C gelagert, angegeben in Gewichtsprozent vom Trockengewicht.

| Probe | Bindemittel | Wasseraufnahme nach 1 h | Biegefestigkeit trocken | Biegefestigkeit naß |
|---|---|---|---|---|
| | | (%) | (N/cm²) | (N/cm²) |
| 1 | B | 1,7 | 580 | 590 |
| 2 | E | 5,7 | 820 | 940 |
| 3 | I | 10,5 | 550 | 570 |
| 4 | J | 4,1 | 880 | 630 |
| 5 | V-B | 22,0 | 850 | 690 |

## Patentansprüche

1. Thermisch härtbare, wäßrige Zusammensetzungen, enthaltend
A) mindestens eine wasserlösliche, lineare oder verzweigte aliphatische Verbindung, die pro Molekül wenigstens zwei funktionelle Aminogruppen vom Typ (a) oder vom Typ (b) 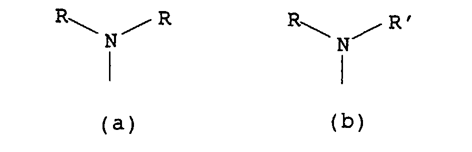 worin R für Hydroxyalkyl steht und R' für Alkyl steht, enthält und
B) ein durch radikalische Polymerisation erhältliches Polymerisat, das zu 5 bis 100 Gew.-% aus wenigstens einer ethylenisch ungesättigten Mono- oder Dicarbonsäure aufgebaut ist.

2. Zusammensetzung nach Anspruch 1, enthaltend als Komponente (A) mindestens eine Verbindung der Formel I 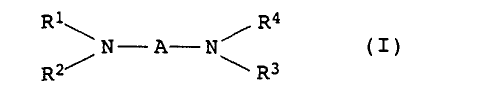 worin
A für C₂-C₁₈-Alkylen steht, das gegebenenfalls substituiert ist durch ein oder mehrere Gruppen, die unabhängig voneinander ausgewählt sind unter Alkyl, Hydroxyalkyl, Cycloalkyl, OH und NR⁶R⁷, wobei R⁶ und R⁷ unabhängig voneinander für H, Hydroxyalkyl oder Alkyl stehen, und das gegebenenfalls unterbrochen ist durch ein oder mehrere Sauerstoffatome und/oder NR⁵-Gruppen, wobei R⁵ für H, Hydroxyalkyl, (CH₂)ₙNR⁶R⁷, wobei n für 2 bis 5 steht und R⁶ und R⁷ die oben angegebenen Bedeutungen besitzen, oder Alkyl, das seinerseits durch ein oder mehrere NR⁵-Gruppen, wobei R⁵ die oben angegebenen Bedeutungen besitzt, unterbrochen und/oder durch ein oder mehrere NR⁶R⁷-Gruppen substituiert sein kann, wobei R⁶ und R⁷ die oben angegebenen Bedeutungen besitzen, steht;
oder A für einen Rest der Formel steht: 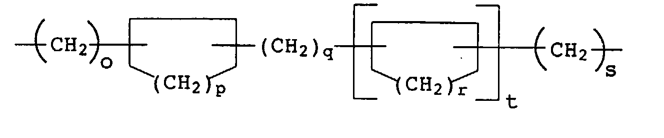
worin
o, q und s unabhängig voneinander für 0 oder eine ganze Zahl von 1 bis 6 stehen,
p und r unabhängig voneinander für 1 oder 2 stehen und
t für 0,1 oder 2 steht,
wobei die cycloaliphatischen Reste auch durch 1, 2 oder 3 Alkylreste substituiert sein können und
R¹, R² und R³ und R⁴ unabhängig voneinander für H, Hydroxyalkyl, Alkyl oder Cycloalkyl stehen.

3. Zusammensetzung nach Anspruch 2, wobei die Komponente (A) ausgewählt ist unter
a) mindestens einer Verbindung der Formel Ia: 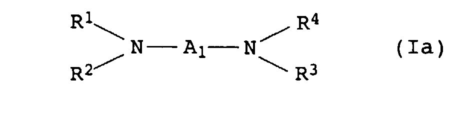 worin
A₁ für C₂-C₁₂-Alkylen steht, das gegebenenfalls durch mindestens eine Alkylgruppe und/oder mindestens eine NR⁶R⁷-Gruppe substituiert ist, wobei R⁶ und R⁷ unabhängig voneinander für Alkyl oder Hydroxyalkyl stehen und
R¹, R², R³ und R⁴ unabhängig voneinander für Hydroxyalkyl oder H stehen oder einer der Reste R¹ und R² und/oder einer der Reste R³ und R⁴ für Alkyl oder Cycloalkyl steht;
b) mindestens einer Verbindung der Formel Ib: 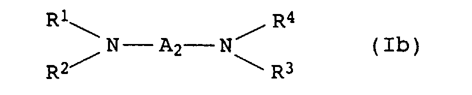 worin
A₂ für C₂-C₈-Alkylen steht, das durch mindestens eine NR⁵-Gruppe unterbrochen ist, wobei R⁵ (oder die Reste R⁵ unabhängig voneinander) für Hydroxyalkyl oder Alkyl steht (stehen) und
R¹, R², R³ und R⁴ unabhängig voneinander für Hydroxyalkyl oder H stehen;
c) mindestens einer Verbindung der Formel Ic: 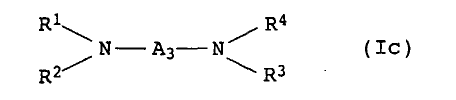 worin
A₃ für C₂-C₈-Alkylen steht, das durch mindestens eine NR⁵-Gruppe unterbrochen ist, wobei R⁵ für H, Hydroxyalkyl oder CH₂CH₂NR⁶R⁷ steht,
R¹, R², R³ und R⁴ unabhängig voneinander für Alkyl stehen, das gegebenenfalls durch mindestens eine NR⁵-Gruppe unterbrochen und/oder durch mindestens eine NR⁶R⁷-Gruppe substituiert ist,
R⁵ für H, Hydroxyalkyl oder -R⁸NR⁶R⁷ steht,
R⁶ und R⁷ unabhängig voneinander für H, Hydroxyalkyl oder -R⁸R⁶R⁷ stehen und
R⁸ für einen Ethylen- oder Propylenrest steht,
wobei (durchschnittlich) wenigstens 30% der N-Atome eine Hydroxyalkylgruppe tragen;
d) mindestens einer Verbindung der Formel Ie: 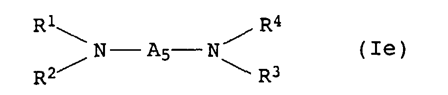 worin
A₅ für C₆-C₁₈-Alkylen steht, das durch mindestens eine NR⁵-Gruppe unterbrochen ist, wobei R⁵ für (CH₂)ₙNR⁶R⁷ oder Alkyl steht, das gegebenenfalls durch wenigstens eine NR⁵-Gruppe, worin R⁵ für (CH₂)ₙR⁶R⁷ oder Alkyl steht, unterbrochen und/oder durch mindestens eine NR⁶R⁷-Gruppe substituiert ist, n für 2 oder 3 steht und
R¹, R², R³, R⁴, R⁶ und R⁷ unabhängig voneinander für Hydroxyalkyl oder H stehen;
e) mindestens einer Verbindung der Formel If: 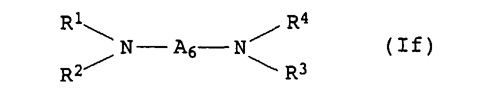 worin
A₆ für C₂-C₁₂-Alkylen steht, das durch mindestens ein Sauerstoffatom unterbrochen ist und
R¹, R², R³ und R⁴ unabhängig voneinander für Hydroxyalkyl oder H stehen; oder
wobei es sich bei der Komponente (A) um Polyalkanolamine handelt, die durch Kondensation von Dialkanolaminen und/oder Trialkanolaminen mit sich selbst, gegebenenfalls in Gegenwart von ein- bzw. mehrwertigen Alkoholen oder ein- bzw. mehrwertigen Aminen, erhältlich sind.

4. Zusammensetzung nach Anspruch 3, wobei es sich bei der Komponente (A) um ein Umsetzungsprodukt eines Polyethylenimins mit Ethylenoxid handelt.

5. Zusammensetzung nach einem der vorhergehenden Ansprüche, wobei es sich bei der Hydroxyalkylgruppe in den obigen Definitionen um eine Hydroxypropyl- oder Hydroxyethylgruppe handelt.

6. Zusammensetzung nach einem der vorhergehenden Ansprüche, wobei die Komponente (B) aufgebaut ist aus mindestens einer Verbindung, die ausgewählt ist unter Acrylsäure, Methacrylsäure, Crotonsäure, Fumarsäure, Maleinsäure, 2-Methylmaleinsäure und Itaconsäure.

7. Zusammensetzung nach Anspruch 6, wobei die Komponente (B) zumindest teilweise aus Maleinsäure aufgebaut ist.

8. Zusammensetzung nach einem der vorhergehenden Ansprüche, wobei die Komponente (B) bis zu 95 Gew.-% andere ethylenisch ungesättigte Monomere einpolymerisiert enthält.

9. Zusammensetzung nach Anspruch 8, wobei die ethylenisch ungesättigten Monomere ausgewählt sind unter Estern der (Meth)acrylsäure mit C₁-C₁₂-Monoalkoholen oder -Dialkoholen, vinylaromatischen Verbindungen, Butadien, Vinylestern von aliphatischen C₂-C₁₂-Monocarbonsäuren, (Meth)acrylnitril, (Meth)acrylamid, N-C₁-C₆-Alkyl(meth)acrylamiden und N,N-Di-C₁-C₆-Alkyl(meth)acrylamiden.

10. Verwendung der Zusammensetzungen nach einem der Ansprüche 1 bis 9 als Bindemittel für Formkörper.

11. Bindemittel, enthaltend eine Zusammensetzung nach einem der Ansprüche 1 bis 9.

12. Formkörper, erhältlich durch Imprägnieren eines Substrates mit einer Zusammensetzung nach einem der Ansprüche 1 bis 9 bzw. einem Bindemittel nach Anspruch 11 und Aushärten des imprägnierten Substrats.

## Claims

1. Aqueous thermally curable compositions comprising
A) at least one water-soluble, linear or branched aliphatic compound containing at least two functional amino groups of the type (a) or of the type (b) 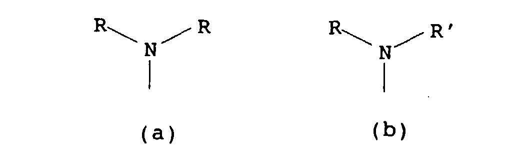 where R is hydroxyalkyl and R' is alkyl, per molecule and
B) an addition polymer containing from 5 to 100 % by weight of units derived from at least one ethylenically unsaturated mono- or dicarboxylic acid and obtainable by free-radical polymerization.

2. A composition as claimed in claim 1, wherein component (A) comprises at least one compound of the formula I 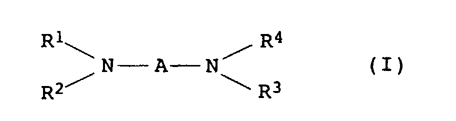 where
A is C₂-C₁₈-alkylene, unsubstituted or substituted by one or more groups selected independently of each or one another from the group consisting of alkyl, hydroxyalkyl, cycloalkyl, OH and NR⁶R⁷, where R⁶ and R⁷ are independently of each other H, hydroxyalkyl or alkyl, and uninterrupted or interrupted by one or more oxygen atoms and/or NR⁵ groups, where R⁵ is H, hydroxyalkyl,
(CH₂)ₙNR⁶R⁷, where n is from 2 to 5 and R⁶ and R⁷ are each as defined above, or alkyl, in turn uninterrupted or interrupted by one or more NR⁵ groups, where R⁵ is as defined above, and/or unsubstituted or substituted by one or more NR⁶R⁷ groups, where R⁶ and R⁷ are each as defined above; or A is a radical of the formula: 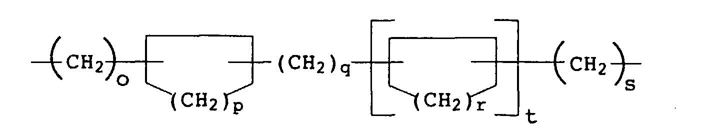 where
o, q and s are each independently of the others 0 or an integer from 1 to 6,
p and r are independently of each other 1 or 2, and
t is 0, 1 or 2,
the cycloaliphatic radicals are unsubstituted or substituted by 1, 2 or 3 alkyl radicals, and
R¹, R², R³ and R⁴ are each independently of the others H, hydroxyalkyl, alkyl or cycloalkyl.

3. A composition as claimed in claim 2, wherein component (A) is selected from
a) at least one compound of the formula Ia: 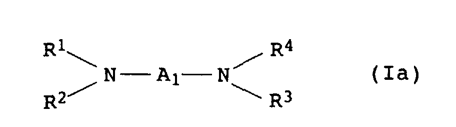 where
A₁ is C₂-C₁₂-alkylene, unsubstituted or substituted by at least one alkyl group and/or at least one NR⁶R⁷ group, where R⁶ and R⁷ are independently of each other alkyl or hydroxyalkyl, and
R¹, R², R³ and R⁴ are each independently of the others hydroxyalkyl or H, or one of R¹ and R² and/or one of R³ and R⁴ is alkyl or cycloalkyl;
b) at least one compound of the formula Ib: 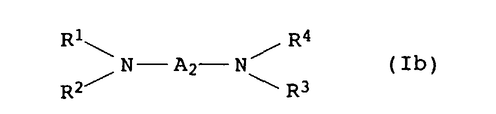 where
A₂ is C₂-C₈-alkylene which is interrupted by at least one NR⁵ group, where R⁵ (or each of the R⁵ radicals independently) is hydroxyalkyl or alkyl, and
R¹, R², R³ and R⁴ are each independently of the others hydroxyalkyl or H;
c) at least one compound of the formula Ic: 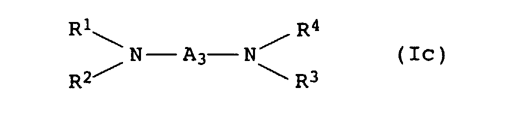 where
A₃ is C₂-C₈-alkylene which is interrupted by at least one NR⁵ group, where R⁵ is H, hydroxyalkyl or CH₂CH₂NR⁶R⁷,
R¹, R², R³ and R⁴ are each independently of the others alkyl, uninterrupted or interrupted by at least one NR⁵ group and/or unsubstituted or substituted by at least one NR⁶R⁷ group,
R⁵ is H, hydroxyalkyl or -R⁸NR⁶R⁷,
R⁶ and R⁷ are independently of each other H, hydroxyalkyl or -R⁸NR⁶R⁷, and
R⁸ is ethylene or propylene, and (on average) at least 30 % of the N atoms bear a hydroxyalkyl group;
d) at least one compound of the formula Ie: 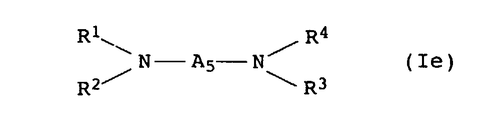 where
A₅ is C₆-C₁₈-alkylene which is interrupted by at least one NR⁵ group, where R⁵ is (CH₂)ₙNR⁶R⁷ or alkyl which is uninterrupted or interrupted by at least one NR⁵ group, where R⁵ is (CH₂)ₙR⁶R⁷ or alkyl, and/or unsubstituted or substituted by at least one NR⁶R⁷ group, n is 2 or 3, and
R¹, R², R³, R⁴, R⁶ and R⁷ are each independently of the others hydroxyalkyl or H;
e) at least one compound of the formula If: 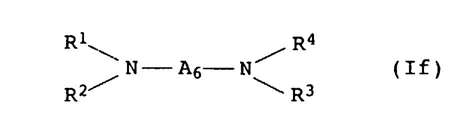 where
A₆ is C₂-C₁₂-alkylene which is interrupted by at least one oxygen atom, and
R¹, R², R³ and R⁴ are each independently of the others hydroxyalkyl or H; or
wherein component (A) comprises polyalkanolamines obtainable by self-condensation of dialkanolamines and/or trialkanolamines in the presence or absence of mono- or polyhydric alcohols or mono- or polybasic amines.

4. A composition as claimed in claim 3, wherein component (A) is a reaction product of a polyethyleneimine with ethylene oxide.

5. A composition as claimed in any of the preceding claims, wherein hydroxyalkyl is hydroxypropyl or hydroxyethyl.

6. A composition as claimed in any of the preceding claims, wherein component (B) is polymerized from at least one compound selected from the group consisting of acrylic acid, methacrylic acid, crotonic acid, fumaric acid, maleic acid, 2-methylmaleic acid and itaconic acid.

7. A composition as claimed in claim 6, wherein component (B) is at least partly polymerized from maleic acid.

8. A composition as claimed in any of the preceding claims, wherein component (B) contains up to 95 % by weight of units derived from other ethylenically unsaturated monomers.

9. A composition as claimed in claim 8, wherein the ethylenically unsaturated monomers are selected from the group consisting of esters of (meth)acrylic acid with C₁-C₁₂-monoalcohols or -dialcohols, aromatic vinyl compounds, butadiene, vinyl esters of aliphatic C₂-C₁₂-monocarboxylic acids, (meth)acrylonitrile, (meth)acrylamide, N-C₁-C₆-alkyl-(meth)acrylamides and N,N-di-C₁-C₆-alkyl(meth)acrylamides.

10. The use of a composition as claimed in any of claims I to 9 as binder for a shaped article.

11. A binder comprising a composition as claimed in any of claims 1 to 9.

12. A shaped article obtainable by impregnating a substrate with a composition as claimed in any of claims I to 9 or a binder as claimed in claim 11 and curing the impregnated substrate.

## Revendications

1. Compositions aqueuses, durcissables à la chaleur, contenant
A) au moins un composé aliphatique linéaire ou ramifié, hydrosoluble, qui contient par molécule au moins deux groupes amino fonctionnels de type (a) ou de type (b) 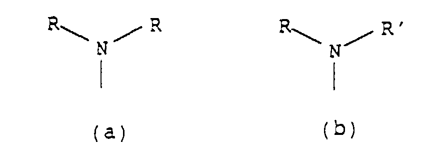 où R désigne un hydroxyalkyle et R' un alkyle, et
B) un polymère pouvant être obtenu par polymérisation radicalaire, qui est constitué pour 5 à 100 % en poids d'au moins un acide mono- ou dicarboxylique à insaturation éthylénique.

2. Composition selon la revendication 1, contenant comme composant (A) au moins un composé de formule I 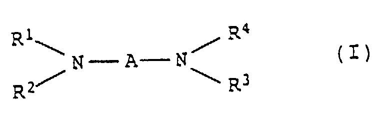 où
A désigne un alkylène en C₂-C₁₈, qui est éventuellement substitué par un ou plusieurs groupes, qui sont choisis indépendamment l'un de l'autre parmi les groupes alkyle, hydroxyalkyle, cycloalkyle, OH et NR⁶R⁷, tandis que R⁶ et R⁷ représentent, indépendamment l'un de l'autre, H ou un groupe hydroxyalkyle ou alkyle, et qui est éventuellement interrompu par un ou plusieurs atomes d'oxygène et/ou groupes NR⁵, tandis que R⁵ désigne H ou un groupe hydroxyalkyle, (CH₂)ₙNR⁶R⁷, tandis que n vaut 2 à 5, et R⁶ et R⁷ ont les significations indiquées plus haut, ou un alkyle, qui peut quant à lui être interrompu par un ou plusieurs groupes NR⁵, où R⁵ a les significations indiquées plus haut, et/ou peut être substitué par un ou plusieurs groupes NR⁶R⁷, où R⁶ et R⁷ ont les significations indiquées plus haut,
ou A désigne un reste de formule: 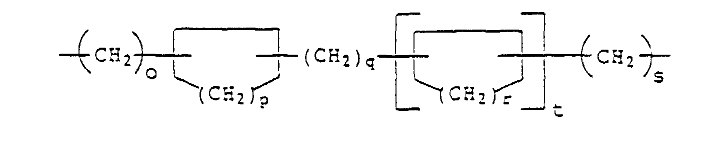 où
o, q et s représentent, indépendamment l'un de l'autre, 0 ou un nombre entier de 1 à 6,
p et r sont, indépendamment l'un de l'autre, 1 ou 2 et
t vaut 0, 1 ou 2,
tandis que les restes cycloaliphatiques peuvent également être substitués par 1, 2 ou 3 restes alkyle et
R¹, R², R³ et R⁴ désignent, indépendamment l'un de l'autre, H ou un groupe hydroxyalkyle, alkyle ou cycloalkyle.

3. Composition selon la revendication 2, dans laquelle le composant (A) est choisi parmi
a) au moins un composé de formule Ia: 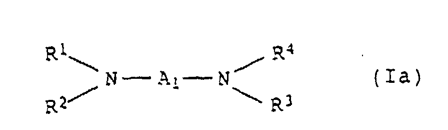 où
A₁ désigne un groupe alkylène en C₂-C₁₂, qui est éventuellement substitué par au moins un groupe alkyle et/ou au moins un groupe NR⁶R⁷, tandis que R⁶ et R⁷ représentent, indépendamment l'un de l'autre, un groupe alkyle ou hydroxyalkyle et
R¹, R², R³ et R⁴ désignent, indépendamment l'un de l'autre, un groupe hydroxyalkyle ou H, ou l'un des restes R¹ et R², et/ou l'un des restes R³ et R⁴ représente un groupe alkyle ou cycloalkyle,
b) au moins un composé de formule Ib: 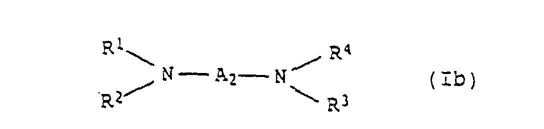 où
A₂ désigne un groupe alkylène en C₂-C₈, qui peut être interrompu par au moins un groupe NR⁵, tandis que R⁵ (ou les restes R⁵ indépendamment l'un de l'autre) représente(nt) un groupe hydroxyalkyle ou alkyle, et
R¹, R², R³ et R⁴ désignent, indépendamment l'un de l'autre, un groupe hydroxyalkyle ou H,
c) au moins un composé de formule Ic: 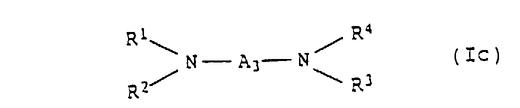 où
A₃ représente un groupe alkylène en C₂-C₈, qui est interrompu par au moins un groupe NR⁵, tandis que R⁵ représente H ou un groupe hydroxyalkyle ou CH₂CH₂NR⁶R⁷,
R¹, R², R³ et R⁴ désignent, indépendamment l'un de l'autre, un groupe alkyle, qui est éventuellement interrompu par au moins un groupe NR⁵ et/ou substitué par au moins un groupe NR⁶R⁷,
R⁵ désigne H ou un groupe hydroxyalkyle ou -R⁸NR⁶R⁷,
R⁶ et R⁷ représentent, indépendamment l'un de l'autre, H ou un groupe hydroxyalkyle ou -R⁸NR⁶R⁷ et
R⁸ désigne un reste éthylène ou propylène,
tandis que (en moyenne) au moins 30 % des atomes d'azote portent un groupe hydroxyalkyle,
d) au moins un composé de formule Ie: 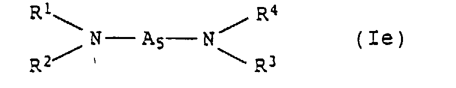 où
A₅ désigne un groupe alkylène en C₆-C₁₈, qui est interrompu par au moins un groupe NR⁵, tandis que R⁵ représente un groupe (CH₂)ₙNR⁶R⁷ ou alkyle, qui est éventuellement interrompu par au moins un groupe NR⁵, où R⁵ désigne un groupe (CH₂)ₙR⁶R⁷ ou alkyle et/ou substitué par au moins un groupe NR⁶R⁷, n vaut 2 ou 3, et
R¹, R², R³, R⁴, R⁶ et R⁷ désignent, indépendamment l'un de l'autre, un groupe hydroxyalkyle ou H,
e) au moins un composé de formule If: 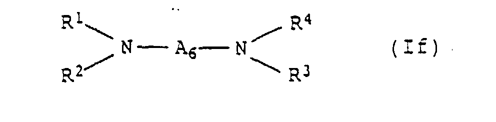 où
A₆ désigne un groupe alkylène en C₂-C₁₂, qui est interrompu par au moins un atome d'oxygène, et
R¹, R², R³ et R⁴ désignent, indépendamment l'un de l'autre, un groupe hydroxyalkyle ou H, ou
dans laquelle il s'agit pour le composant (A) de polyalcanolamines, qui peuvent être obtenues par condensation de dialcanolamines et/ou de trialcanolamines avec elles-mêmes, éventuellement en présence d'alcools mono- ou polyvalents ou d'amines mono- ou polyvalentes.

4. Composition selon la revendication 3, dans laquelle il s'agit pour le composant (A) d'un produit de réaction d'une polyéthylèneimine avec de l'oxyde d'éthylène.

5. Composition selon l'une des revendications précédentes, dans laquelle il s'agit pour le groupe hydroxyalkyle dans les définitions ci-dessus d'un groupe hydroxypropyle ou hydroxyéthyle.

6. Composition selon l'une des revendications précédentes, dans laquelle le composant (B) est constitué d'au moins un composé qui est choisi parmi l'acide acrylique, l'acide méthacrylique, l'acide crotonique, l'acide fumarique, l'acide maléique, l'acide 2-méthylmaléique et l'acide itaconique.

7. Composition selon la revendication 6, dans laquelle le composant (B) est constitué au moins pour partie d'acide maléique.

8. Composition selon l'une des revendications précédentes, dans laquelle le composant (B) contient jusqu'à 95 % en poids d'autres monomères à insaturation éthylénique copolymérisés.

9. Composition selon la revendication 8, dans laquelle les monomères à insaturation éthylénique sont choisis parmi les esters d'acide (méth)acrylique avec des monoalcools ou des dialcools en C₁-C₁₂, les composés vinylaromatiques, le butadiène, les esters vinyliques des acides monocarboxyliques aliphatiques en C₂-C₁₂, le (méth)acrylonitrile, le (méth)acrylamide, les N-(alkyl en C₁-C₆) (méth)acrylamides et les N,N-di(alkyl en C₁-C₆) (méth)acrylamides.

10. Utilisation des compositions selon l'une des revendications 1 à 9 comme liant pour des produits façonnés.

11. Liant, contenant une composition selon l'une des revendications 1 à 9.

12. Produit façonné, pouvant être obtenu par imprégnation d'un substrat avec une composition selon l'une des revendications 1 à 9 ou un liant selon la revendication 11 et durcissement du substrat imprégné.
